# EUROPEAN PATENT SPECIFICATION

(11) **EP 4 404 603 B1**
(45) Date of publication and mention of the grant of the patent: **24.06.2026**
(21) Application number: 22882774.7
(22) Date of filing: 14.10.2022
(51) Int. Cl.: H04W 8/20, H04L 67/141, H04L 67/146, H04L 69/08, H04L 69/085

(54) **COMMUNICATION METHOD, APPARATUS AND SYSTEM**
KOMMUNIKATIONSVERFAHREN, -VORRICHTUNG UND -SYSTEM
PROCÉDÉ, APPAREIL ET SYSTÈME DE COMMUNICATION

(30) Priority: 19.10.2021 CN 202111216597
(43) Date of publication of application: 24.07.2024
(73) Proprietor: Huawei Technologies Co., Ltd., Shenzhen, Guangdong 518129 (CN)
(72) Inventor: HE, Qingchun, Shenzhen, Guangdong 518129 (CN); CHENG, Xingqing, Shenzhen, Guangdong 518129 (CN); LI, Mingchao, Shenzhen, Guangdong 518129 (CN)
(74) Representative: Thun, Clemens
(86) International application number: PCT/CN2022/125495
(87) International publication number: WO 2023/066168

(56) References cited:
- WO-A1-2020/098954
- CN-A- 110 771 221
- CN-A- 113 455 026
- US-A1- 2019 335 330
- US-A1- 2020 015 293
- US-A1- 2020 305 207
- US-A1- 2021 058 896

## Description

### TECHNICAL FIELD

Embodiments of this application relate to the field of communication technologies, and in particular, to a communication method, apparatus, and system.

### BACKGROUND

In order to enable different communication systems to complement each other's advantages, different communication systems are often converged. For example, in a short-range communication system, a communication distance is relatively limited, but power consumption of a terminal is low and costs are low. A 5th generation (5th generation, 5G) cellular network communication system may provide macro coverage, and a communication range is wide, but power consumption of the terminal and costs are relatively high. Based on this, the short-range communication system and the 5G cellular network communication system may be converged, so that the converged communication system can implement long-range transmission with low power consumption and low costs.

However, some terminals in the short-range communication system do not support non-access stratum (non-access stratum, NAS) signaling transmission. Therefore, a node (for example, a management node) that supports NAS signaling transmission in a short range needs to access a cellular network, to indirectly enjoy a service provided by a 5G core network. Therefore, when one PDU (protocol data unit, PDU) session includes data of a plurality of nodes that do not support NAS signaling, how to enable the 5G core network to perceive these nodes and manage (for example, perform policy configuration on) these nodes in the PDU session is a technical problem that needs to be urgently resolved.

The document US 2020/0305207 A1 shows a data transmission method, and an according device and computer storage medium.

The document US 2021/0058896 A1 shows a communication method, and an according device and system.

The document US 202/0015293 A1 also shows a communication method, and an according device and system.

### SUMMARY

The present invention is defined by the independent claims. Further advantageous developments are shown by the dependent claims.

Embodiments of this application provide a communication method, apparatus, and system, so that a 5G core network perceives a terminal device that does not support NAS signaling transmission, and manages the terminal device that does not support NAS signaling transmission.

According to a first aspect, an embodiment of this application provides a communication method, which may be applied to a first node. The method includes: obtaining first information, where the first information indicates a mapping relationship between a second node and the first node; and sending the first information to a third node, where the first information identifies the second node associated with a protocol data unit PDU session.

According to the method, in this embodiment of this application, the first node may send the mapping relationship between the second node (that is, a terminal node that does not support NAS signaling transmission) and the first node to the third node (a core network), so that the core network may identify (that is, perceive or manage) the terminal node that does not support NAS signaling transmission, thereby managing a service provided by the terminal node that does not support NAS signaling transmission, to better meet a requirement of the terminal device that does not support NAS signaling transmission.

In a possible design, that the first information indicates a mapping relationship between a second node and the first node includes: The first information indicates a first mapping relationship between an identifier of the second node and a first IP address of the first node, or a second mapping relationship between an identifier of the second node and a first port number of the first node, or a third mapping relationship between an identifier of the second node and a first media access control MAC address of the first node, or a mapping relationship between an identifier of the second node and a first identifier of the first node.

It may be understood that the first node is a management node of the second node, and the first node may be configured to manage or maintain information of the second node. The mapping relationship between the first node and the second node means that the first node establishes a mapping relationship based on information (for example, an identifier) of the second node managed by the first node and specific information of the first node, and sends the mapping relationship to the core network, so that the core network can perceive the first node and the information of the second node managed by the first node.

In this design, a plurality of implementations of the mapping relationship between the first node and the second node are provided, so that the third node can flexibly identify the second node in a plurality of manners.

In a possible design, the first IP address is one of a plurality of public IP addresses allocated to the first node in the PDU session. The first port number is one of a plurality of port numbers allocated to the first node in the PDU session. The first MAC address is one of a plurality of MAC addresses derived by the first node based on a unique MAC address of the first node. The first identifier may be one of a plurality of identifiers temporarily allocated by the first node. The first identifier is used to establish a mapping relationship with the identifier of the second node.

It may be understood that when the PDU session includes the plurality of public IP addresses of the first node, the mapping relationship between the second node and the first node is the first mapping relationship between the identifier of the second node and the first IP address of the first node. When the PDU session includes one public IP address of the first node, the mapping relationship between the second node and the first node is the second mapping relationship between the identifier of the second node and the first port number of the first node.

In a possible design, the first information is carried in a non-access stratum NAS message, and the NAS message is any one of NAS messages in a PDU session establishment procedure, a PDU session modification procedure, and a registration procedure. For example, the NAS message may include but is not limited to any one of a registration request message, an access session request message, a PDU session establishment request message, and a PDU session modification request message.

In this design, a manner of sending the first information is provided, and the first node may send the first information to the third node in a plurality of cases.

In a possible design, the second node in the PDU session is associated with a packet filter, and the packet filter is used to determine a quality of service QoS flow corresponding to the second node in the PDU session.

It may be understood that one PDU session is associated with one or more packet filters (also referred to as a packet filter set), the packet filter includes an IP address and a port number of the first node, and a mapping relationship is established between the second node and the IP address or the port number of the first node. Therefore, the packet filter associated with the PDU session may be associated with the second node. In this way, in this design, the third node may identify the second node from the PUD session based on the IP address and the port number of the first node, or the MAC address of the first node, or the identifier of the first node, and the mapping relationship between the first node and the second node, which is included in the packet filter, so that the third node can adjust a QoS policy of the second node.

In a possible design, that the first node obtains the first information may include: receiving access-side session request information or access-side session modification request information from the second node; determining that the second node is associated with the PDU session; and establishing the first mapping relationship based on the identifier of the second node and the first IP address associated with the PDU session; or establishing the second mapping relationship based on the identifier of the second node and the first port number associated with the PDU session; or establishing the third mapping relationship based on the identifier of the second node and the first MAC address; or establishing the mapping relationship between the identifier of the second node and the first identifier of the first node based on the identifier of the second node and the first identifier.

It may be understood that the access-side session request information indicates that the second node requests the first node to allocate a PDU session, and the access-side session modification request information indicates that the second node requests the first node to modify a PDU session.

In this design, after receiving information related to the PDU session from the second node, the first node associates the corresponding PDU session with the second node, and the first node may establish the mapping relationship between the second node and the first node. The PDU session is allocated by the first node to the second node based on a requirement of the second node, but the PDU session is directly associated (established between the first node and the core network) with the first node. Therefore, the third node may determine, based on the mapping relationship, a correspondence between the PDU session or data in the PDU session and the second node, so as to identify the second node associated with the PDU session.

In a possible design, after sending the first information to the third node, the first node may further: receive second information from the second node, where the second information includes link status information and/or node status information; add the identifier of the second node to the second information, to obtain third information; and send the third information to the third node.

The link status information includes at least one of a short-range measurement amount (short-range air interface status information) and a link status measurement amount between a short-range node and a 5G core network.

In this design, after sending the first information to the third node, if the first node receives control information (the second information) of the second node, the first node may add the identifier of the second node to the control information, and send the control information to the third node. In this way, the third node may identify, based on the first information, data (for example, the QoS flow) associated with the second node, so that the third node accordingly adjusts configuration information (a QoS flow-related parameter) of the second node.

In a possible design, the first node may further: receive configuration information from the third node, where the configuration information includes at least one of running status management information, node parameter update information, a link status detection policy, a node status reporting policy, and a QoS configuration policy of the second node; and send the configuration information to the second node.

In this design, the first node may forward, to the second node, the configuration information formulated by the third node for the second node. In this way, the third node may configure the second node, so that a service provided by the third node for the second node better adapts to a requirement of the second node.

In a possible design, the link status detection policy includes at least one of a measurement object, a reporting object, a reporting threshold, a reporting period, and an event parameter. The running status management information includes any one of a power-on state, a power-off state, and a sleep state of the second node. The node status update information includes update information corresponding to any one of version information, power information, hardware information, and software information of the second node. The node status reporting policy includes at least one of a reporting object, a reporting period, and a reporting event.

In a possible design, the first node may further: send a fourth mapping relationship between the identifier of the second node and an IP address of the second node to a fourth node. In this design, the first node sends the fourth mapping relationship between the identifier of the second node and the IP address of the second node to the fourth node, so that the fourth node may identify the second node, thereby providing a service for the second node.

In a possible design, the first node communicates with the second node based on a first communication technology, and communicates with the third node based on a second communication technology.

According to a second aspect, an embodiment of this application provides a communication method, which may be applied to a third node. The method includes: receiving first information, where the first information indicates a mapping relationship between a second node and a first node; and identifying, based on the first information, the second node associated with a protocol data unit PDU session.

According to the method, in this embodiment of this application, the third node may maintain or manage the mapping relationship between the second node (that is, a terminal node that does not support NAS signaling transmission) and the first node, and may identify (that is, perceive or manage) the terminal node that does not support NAS signaling transmission, thereby managing a service provided by the terminal node that does not support NAS signaling transmission, to better meet a requirement of the terminal device that does not support NAS signaling transmission.

In a possible design, that the first information indicates a mapping relationship between a second node and a first node includes: The first information indicates a first mapping relationship between an identifier of the second node and a first IP address of the first node, or a second mapping relationship between an identifier of the second node and a first port number of the first node, or a third mapping relationship between an identifier of the second node and a first media access control MAC address of the first node, or a mapping relationship between an identifier of the second node and a first identifier of the first node.

In a possible design, the first IP address is one of a plurality of public IP addresses allocated to the first node in the PDU session.

In a possible design, the first port number is one of a plurality of port numbers allocated to the first node in the PDU session. The PDU session includes one public IP address of the first node.

In a possible design, the first MAC address is one of a plurality of MAC addresses derived by the first node based on a unique MAC address of the first node. The first identifier may be one of a plurality of identifiers temporarily allocated by the first node.

In a possible design, the first information is carried in a non-access stratum NAS message, and the NAS message is any one of NAS messages in a PDU session establishment procedure, a PDU session modification procedure, and a registration procedure. For example, the NAS message may include but is not limited to any one of a registration request message, an access session request message, a PDU session establishment request message, and a PDU session modification request message.

In a possible design, the second node in the PDU session is associated with a packet filter, the packet filter is used to determine a quality of service QoS flow corresponding to the second node in the PDU session, and the QoS flow is used to transmit data associated with the second node. The identifying, based on the first information, the second node associated with a protocol data unit PDU session includes: identifying, based on the public IP address of the first node in the packet filter and the first mapping relationship, the second node associated with the PDU session; or identifying, based on the port number of the first node in the packet filter and the second mapping relationship, the second node associated with the PDU session; or identifying, based on the MAC address of the first node in the packet filter and the third mapping relationship, the second node associated with the PDU session; or, identifying, based on the identifier of the first node in the packet filter and the mapping relationship between the identifier of the second node and the first identifier of the first node, the second node associated with the PDU session.

In a possible design, after receiving the first information from the first node, the third node may further: receive third information, where the third information includes the identifier of the second node, link status information, and/or node status information; and identify, based on the identifier of the second node and the first mapping relationship, the second node associated with the third information; or identify, based on the identifier of the second node and the second mapping relationship, the second node associated with the third information; or identify, based on the identifier of the second node and the third mapping relationship, the second node associated with the third information; or identify, based on the identifier of the second node and the mapping relationship between the identifier of the second node and the first identifier of the first node, the second node associated with the third information. The link status information includes at least one of a short-range measurement amount (short-range air interface status information) and a link status measurement amount between a short-range node and a 5G core network.

In a possible design, the third node may further: determine configuration information based on the first information, where the configuration information includes at least one of running status management information, node parameter update information, a link status detection policy, a node status reporting policy, and a QoS configuration policy of the second node; and send the configuration information to the first node.

In a possible design, the link status detection policy includes at least one of a measurement object, a reporting object, a reporting threshold, a reporting period, and an event parameter. The running status management information includes any one of a power-on state, a power-off state, and a sleep state of the second node. The node status update information includes update information corresponding to any one of version information, power information, hardware information, and software information of the second node. The node status reporting policy includes at least one of a reporting object, a reporting period, and a reporting event.

In a possible design, the third node may further: communicate with the first node based on a second communication technology; and provide, based on the second communication technology, a service for the second node that is based on a first communication technology.

According to a third aspect, an embodiment of this application provides a communication method, which may be applied to a second node. The method includes: receiving configuration information from a first node, where the configuration information includes at least one of running status management information, node parameter update information, a link status detection policy, and a quality of service QoS configuration policy of the second node; and configuring the second node based on the configuration information.

According to the method in this application, the second node receives the configuration information forwarded by the first node, and may perform corresponding configuration on the second node based on the configuration information.

In a possible design, the link status detection policy includes at least one of a measurement object, a reporting object, a reporting threshold, a reporting period, and an event parameter. The running status management information includes any one of a power-on state, a power-off state, and a sleep state of the second node. The node status update information includes update information corresponding to any one of version information, power information, hardware information, and software information of the second node. The node status reporting policy includes at least one of a reporting object, a reporting period, and a reporting event.

In a possible design, the second node may further send access-side session request information or access-side session modification request information to the first node. It may be understood that the access-side session request information indicates that the second node requests the first node to allocate a PDU session, and the access-side session modification request information indicates that the second node requests the first node to modify a PDU session.

In a possible design, the second node may further send second information to the first node. The second information includes link status information and/or node status information.

In a possible design, the second node may further communicate with the first node based on a first communication technology, and obtain a service provided based on a second communication technology from the third node.

According to a fourth aspect, an embodiment of this application provides a communication method, which may be applied to a fourth node. The method includes: receiving a fourth mapping relationship between an identifier of a second node and an IP address of the second node from a first node; and determining the second node based on the fourth mapping relationship and the IP address of the second node.

According to the method, the fourth node may determine the second node based on the IP address of the second node and the fourth mapping relationship between the identifier of the second node and the IP address of the second node, so that the fourth node may identify (that is, perceive or manage) the second node, thereby better providing a service for the second node.

According to a fifth aspect, an embodiment of this application provides a communication apparatus. The apparatus is configured to implement the method in any one of the first aspect or any possible design of the first aspect, and includes corresponding functional modules or units, which are separately configured to implement steps in the method in the first aspect. A function may be implemented by hardware, or may be implemented by hardware by executing corresponding software. The hardware or software includes one or more modules corresponding to the function.

For example, the communication apparatus may include: a processing module, configured to obtain first information, where the first information indicates a mapping relationship between a second node and a first node; and a transceiver module, configured to send the first information to a third node, where the first information identifies the second node associated with a protocol data unit PDU session.

In a possible design, that the first information indicates a mapping relationship between a second node and a first node includes: The first information indicates a first mapping relationship between an identifier of the second node and a first IP address of the first node, or a second mapping relationship between an identifier of the second node and a first port number of the first node, or a third mapping relationship between an identifier of the second node and a first media access control MAC address of the first node, or a mapping relationship between an identifier of the second node and a first identifier of the first node.

It may be understood that the first IP address is one of a plurality of public IP addresses allocated to the first node in the PDU session. The first port number is one of a plurality of port numbers allocated to the first node in the PDU session, and the PDU session includes one public IP address of the first node. The first identifier may be one of a plurality of identifiers temporarily allocated by the first node.

In a possible design, the first information is carried in a non-access stratum NAS message, and the NAS message is any one of NAS messages in a PDU session establishment procedure, a PDU session modification procedure, and a registration procedure. For example, the NAS message may include but is not limited to any one of a registration request message, an access session request message, a PDU session establishment request message, and a PDU session modification request message.

In a possible design, the second node in the PDU session is associated with a packet filter, and the packet filter is used to determine a quality of service QoS flow corresponding to the second node in the PDU session.

In a possible design, the transceiver module is further configured to receive access-side session request information or access-side session modification request information from the second node. The processing module is further configured to: determine that the second node is associated with the PDU session; and establish the first mapping relationship based on the identifier of the second node and the first IP address associated with the PDU session; or establish the second mapping relationship based on the identifier of the second node and the first port number associated with the PDU session; or establish the third mapping relationship based on the identifier of the second node and the first MAC address; or establish the mapping relationship between the identifier of the second node and the first identifier of the first node based on the identifier of the second node and the first identifier.

It may be understood that the access-side session request information indicates that the second node requests the first node to allocate a PDU session, and the access-side session modification request information indicates that the second node requests the first node to modify a PDU session.

In a possible design, after sending the first information to the third node, the transceiver module may further receive second information from the second node. The second information includes link status information and/or node status information. The processing module may further add the identifier of the second node to the second information, to obtain third information. Further, the transceiver module may send the third information to the third node. The link status information includes at least one of a short-range measurement amount (short-range air interface status information) and a link status measurement amount between a short-range node and a 5G core network.

In a possible design, the transceiver module may further: receive configuration information from the third node, where the configuration information includes at least one of running status management information, node parameter update information, a link status detection policy, a node status reporting policy, and a QoS configuration policy of the second node; and send the configuration information to the second node.

The link status detection policy includes at least one of a measurement object, a reporting object, a reporting threshold, a reporting period, and an event parameter. The running status management information includes any one of a power-on state, a power-off state, and a sleep state of the second node. The node status update information includes update information corresponding to any one of version information, power information, hardware information, and software information of the second node. The node status reporting policy includes at least one of a reporting object, a reporting period, and a reporting event.

In a possible implementation, the transceiver module may further send a fourth mapping relationship between the identifier of the second node and an IP address of the second node to a fourth node.

In a possible implementation, the transceiver module may communicate with the second node based on a first communication technology, and communicate with the third node based on a second communication technology.

According to a sixth aspect, an embodiment of this application provides a communication apparatus. The apparatus is configured to implement any one of the second aspect or the method in the second aspect, and includes corresponding functional modules or units, which are separately configured to implement steps in the method in the second aspect. A function may be implemented by hardware, or may be implemented by hardware by executing corresponding software. The hardware or software includes one or more modules corresponding to the function.

For example, the communication apparatus may include: a transceiver module, configured to receive first information, where the first information indicates a mapping relationship between a second node and a first node; and a processing module, configured to identify, based on the first information, the second node associated with a protocol data unit PDU session.

In a possible design, that the first information indicates a mapping relationship between a second node and a first node includes: The first information indicates a first mapping relationship between an identifier of the second node and a first IP address of the first node, or a second mapping relationship between an identifier of the second node and a first port number of the first node, or a third mapping relationship between an identifier of the second node and a first media access control MAC address of the first node, or a mapping relationship between an identifier of the second node and a first identifier of the first node.

The first IP address is any one of a plurality of public IP addresses allocated to the first node in the PDU session. The first port number is any one of a plurality of port numbers allocated to the first node in the PDU session, and the PDU session includes one public IP address of the first node. The first MAC address is one of a plurality of MAC addresses derived by the first node based on a unique MAC address of the first node. The first identifier may be one of a plurality of identifiers temporarily allocated by the first node.

In a possible design, the first information is carried in a non-access stratum NAS message, and the NAS message is any one of NAS messages in a PDU session establishment procedure, a PDU session modification procedure, and a registration procedure. For example, the NAS message may include but is not limited to any one of a registration request message, an access session request message, a PDU session establishment request message, and a PDU session modification request message.

In a possible design, the second node in the PDU session is associated with a packet filter, the packet filter is used to determine a quality of service QoS flow corresponding to the second node in the PDU session, and the QoS flow is used to transmit data associated with the second node. The processing module may: identify, based on the public IP address of the first node in the packet filter and the first mapping relationship, the second node associated with the PDU session; or identify, based on the port number of the first node in the packet filter and the second mapping relationship, the second node associated with the PDU session; or identify, based on the MAC address of the first node in the packet filter and the third mapping relationship, the second node associated with the PDU session; or identify, based on the identifier of the first node in the packet filter and the mapping relationship between the identifier of the second node and the first identifier of the first node, the second node associated with the PDU session.

In a possible design, after receiving the first information from the first node, the transceiver module may further receive third information. The third information includes the identifier of the second node, link status information, and/or node status information. The processing module 1201 may further: identify, based on the identifier of the second node and the first mapping relationship, the second node associated with the third information; or identify, based on the identifier of the second node and the second mapping relationship, the second node associated with the third information; or identify, based on the identifier of the second node and the third mapping relationship, the second node associated with the third information; or identify, based on the identifier of the second node and the mapping relationship between the identifier of the second node and the first identifier of the first node, the second node associated with the third information.

In a possible design, the processing module may further: determine configuration information based on the first information, where the configuration information includes at least one of running status management information, node parameter update information, a link status detection policy, a node status reporting policy, and a QoS configuration policy of the second node; and send the configuration information to the first node.

In a possible design, the link status detection policy includes at least one of a measurement object, a reporting object, a reporting threshold, a reporting period, and an event parameter. The running status management information includes any one of a power-on state, a power-off state, and a sleep state of the second node. The node status update information includes update information corresponding to any one of version information, power information, hardware information, and software information of the second node. The node status reporting policy includes at least one of a reporting object, a reporting period, and a reporting event.

In a possible design, the transceiver module may communicate with the first node based on a second communication technology; and provide, based on the second communication technology, a service for the second node that is based on a first communication technology.

According to a seventh aspect, an embodiment of this application provides a communication apparatus. The apparatus is configured to implement any one of the third aspect or the method in the third aspect, and includes corresponding functional modules or units, which are separately configured to implement steps in the method in the third aspect. A function may be implemented by hardware, or may be implemented by hardware by executing corresponding software. The hardware or software includes one or more modules corresponding to the function.

For example, the communication apparatus may include: a transceiver module, configured to receive configuration information from a first node, where the configuration information includes at least one of running status management information, node parameter update information, a link status detection policy, and a quality of service QoS configuration policy of a second node; and a processing module, configured to configure the second node based on the configuration information.

In a possible design, the link status detection policy includes at least one of a measurement object, a reporting object, a reporting threshold, a reporting period, and an event parameter. The running status management information includes any one of a power-on state, a power-off state, and a sleep state of the second node. The node status update information includes update information corresponding to any one of version information, power information, hardware information, and software information of the second node. The node status reporting policy includes at least one of a reporting object, a reporting period, and a reporting event.

In a possible design, the transceiver module may further send access-side session request information or access-side session modification request information to the first node. It may be understood that the access-side session request information indicates that the second node requests the first node to allocate a PDU session, and the access-side session modification request information indicates that the second node requests the first node to modify a PDU session.

In a possible design, the transceiver module may further send second information to the first node. The second information includes link status information and/or node status information. The link status information includes at least one of a short-range measurement amount (short-range air interface status information) and a link status measurement amount between a short-range node and a 5G core network.

In a possible implementation, the transceiver module communicates with the first node based on a first communication technology, and obtains a service provided based on a second communication technology from the third node.

According to an eighth aspect, an embodiment of this application provides a communication apparatus. The apparatus is configured to implement any one of the fourth aspect or the method in the fourth aspect, and includes corresponding functional modules or units, which are separately configured to implement steps in the method in the fourth aspect. A function may be implemented by hardware, or may be implemented by hardware by executing corresponding software. The hardware or software includes one or more modules corresponding to the function. For example, the communication apparatus may include: a transceiver module, configured to receive a fourth mapping relationship between an identifier of a second node and an IP address of the second node from a first node; and a processing module, configured to determine the second node based on a fourth mapping relationship and the IP address of the second node.

According to a ninth aspect, a communication apparatus is provided. The apparatus includes a processor and a memory. The memory is configured to store a computing program or instructions, and the processor is coupled to the memory. When the processor executes the computer program or the instructions, the apparatus is enabled to perform any one of the first aspect or the method in the first aspect, or the apparatus is enabled to perform any one of the second aspect or the method in the second aspect, or the apparatus is enabled to perform any one of the third aspect or the method in the third aspect, or the apparatus is enabled to perform any one of the fourth aspect or the method in the fourth aspect. For example, the communication apparatus may be a terminal device or some components (for example, a chip) in the terminal device. The terminal device may be, for example, a smart mobile terminal, a smart home device, a smart car, or a smart wearable device. The smart mobile terminal is, for example, a mobile phone, a tablet computer, a notebook computer, an ultra-mobile personal computer (ultra-mobile personal computer, UMPC), a netbook, or a personal digital assistant (personal digital assistant, PDA). The smart home device is, for example, a smart refrigerator, a smart washing machine, a smart television, and or a sound box. The smart wearable device is, for example, a smart headset, smart glasses, smart clothes, or shoes.

According to a tenth aspect, this application provides a chip. The chip is connected to a memory, and is configured to read and execute a computer program or instructions stored in the memory, to implement the method in any one of the first aspect or any possible design of the first aspect; or implement the method in any one of the second aspect or any possible design of the second aspect; or implement the method in any one of the third aspect or any possible design of the third aspect; or implement the method in any one of the fourth aspect or any possible design of the fourth aspect.

According to an eleventh aspect, a computer-readable storage medium is provided. The computer-readable storage medium stores a computer program or instructions. When the computer program or the instructions are executed by an apparatus, the apparatus is enabled to perform the method in any one of the first aspect or any possible design of the first aspect; or the apparatus is enabled to perform the method in any one of the second aspect or any possible design of the second aspect; or the apparatus is enabled to perform the method in any one of the third aspect or any possible design of the third aspect; or the apparatus is enabled to implement the method in any one of the fourth aspect or any possible design of the fourth aspect.

According to a twelfth aspect, this application provides a computer program product. The computer program product includes a computer program or instructions. When the computer program or the instructions are executed by an apparatus, the apparatus is enabled to perform the method in any one of the first aspect or any possible design of the first aspect; or the apparatus is enabled to perform the method in any one of the second aspect or any possible design of the second aspect; or the apparatus is enabled to perform the method in any one of the third aspect or any possible design of the third aspect; or the apparatus is enabled to implement the method in any one of the fourth aspect or any possible design of the fourth aspect.

According to a thirteenth aspect, this application provides a communication system. The communication system includes the communication apparatus according to the fourth aspect to the eighth aspect.

It should be understood that, the technical solutions provided in this application may be applied to a scenario in which different communication systems are converged, so that a service provided by a core network in a scenario in which different communication systems perform converged communication can effectively adapt to a requirement of a terminal that does not support NAS signaling transmission.

### BRIEF DESCRIPTION OF DRAWINGS

FIG. 1 is a schematic diagram of a first communication system according to an embodiment of this application;
FIG. 2A is a schematic diagram 1 of a communication system according to an embodiment of this application;
FIG. 2B is a schematic diagram 2 of a communication system according to an embodiment of this application;
FIG. 3 is a schematic flowchart 1 of a first communication method according to an embodiment of this application;
FIG. 4 is a schematic diagram of an architecture of a user-plane control protocol according to an embodiment of this application;
FIG. 5A is a schematic diagram of a first data routing according to an embodiment of this application;
FIG. 5B is a schematic diagram of a second data routing according to an embodiment of this application;
FIG. 5C is a schematic diagram of a third data routing according to an embodiment of this application;
FIG. 5D is a schematic diagram of a fourth data routing according to an embodiment of this application;
FIG. 5E is a schematic diagram of a fifth data routing according to an embodiment of this application;
FIG. 6 is a schematic diagram of an architecture of a control-plane control protocol according to an embodiment of this application;
FIG. 7A is a schematic diagram of a scenario to which an embodiment of this application is applicable;
FIG. 7B is a schematic diagram of a non-PDU session communication procedure according to an embodiment of this application;
FIG. 8 is a schematic flowchart 2 of a first communication method according to an embodiment of this application;
FIG. 9 is a schematic flowchart of a second communication method according to an embodiment of this application;
FIG. 10 is a schematic diagram of a sixth data routing according to an embodiment of this application;
FIG. 11 is a schematic diagram of a structure of a communication apparatus according to an embodiment of this application;
FIG. 12 is a schematic diagram of a structure of another communication apparatus according to an embodiment of this application;
FIG. 13 is a schematic diagram of a structure of still another communication apparatus according to an embodiment of this application;
FIG. 14 is a schematic diagram of a structure of yet another communication apparatus according to an embodiment of this application; and
FIG. 15 is a schematic diagram of a structure of still yet another communication apparatus according to an embodiment of this application.

### DESCRIPTION OF EMBODIMENTS

Some terms in embodiments of this application are explained below, to facilitate understanding of a person skilled in the art.
(1) In embodiments of this application, a second node is a node (for example, a T node) configured to perform service application, and may be a terminal device, or a communication apparatus that can support the terminal device in implementing a function required by the method, or certainly may be another communication apparatus, for example, a chip system.
(2) In embodiments of this application, a first node is a node (for example, a G node) configured to perform authorization and authentication on the second node, or the first node may be a terminal device, or a communication apparatus that can support the terminal device in implementing a function required by the method, or certainly may be another communication apparatus, for example, a chip system.
(3) In embodiments of this application, a third node is a node (for example, a core network node) configured to provide a service for the second node, and may be a network device, or a communication apparatus that can support the network device in implementing a function required by the method, for example, at least one of function entities such as an access and mobility management function (access and mobility management function, AMF), a session management function (session management function, SMF), a user plane function (user plane function, UPF), and a data network (data network, DN). Alternatively, the third node may be a terminal device, or a communication apparatus that can support the terminal device in implementing a function required by the method. Certainly, the third node may also be another communication apparatus, for example, a chip system.
(4) In embodiments of this application, a fourth node is a node configured to provide a core network access service for the second node. The node may be a network device, or a communication apparatus that can support the network device in implementing a function required by the method, or may be an access network device, for example, a trusted non-3rd generation partnership project (3rd generation partnership project, 3GPP) gateway function (trusted non-3GPP gateway function, TNGF) node.
(5) A protocol data unit (protocol data unit session, PDU) session may be understood as a pipeline established between a terminal user and a core network for data transmission. The pipeline may carry one or more quality of service (quality of service, QoS) flows, and each QoS flow has a different QoS attribute or QoS requirement.
(6) In embodiments of this application, the term "a plurality of" means two or more than two. The term "and/or" is an association relationship for describing associated objects, and represents that three relationships may exist. For example, A and/or B may represent the following cases: Only A exists, both A and B exist, and only B exists, where A and B may be in a singular form or a plural form. The character "/" generally indicates an "or" relationship between the associated objects. "At least one of the following items (pieces)" or a similar expression thereof means any combination of these items, including any combination of singular or plural items (pieces). For example, at least one item (piece) of a, b, or c may represent a, b, c, a and b, a and c, b and c, or a, b, and c.

In addition, the terms "first" and "second" below in the description of embodiments of this application are only used for a description purpose, and shall not be understood as an indication or implication of relative importance or implicit indication of a quantity of indicated technical features. Therefore, a feature defined with "first" or "second" may explicitly or implicitly include one or more features.

Embodiments of this application provide a communication method and apparatus, so that a core network may identify a terminal node that does not support NAS signaling, thereby managing a service provided by the core network for the terminal node that does not support NAS signaling. To make the objectives, technical solutions, and advantages of embodiments of this application clearer, the following further describes embodiments of this application in detail with reference to the accompanying drawings.

It may be understood that the communication method provided in embodiments of this application may be applied to a 5G communication system, for example, 5G new radio (new radio, NR), or may be applied to various future communication systems, for example, a 6th generation (6th generation, 6G) communication system. This is not limited herein.

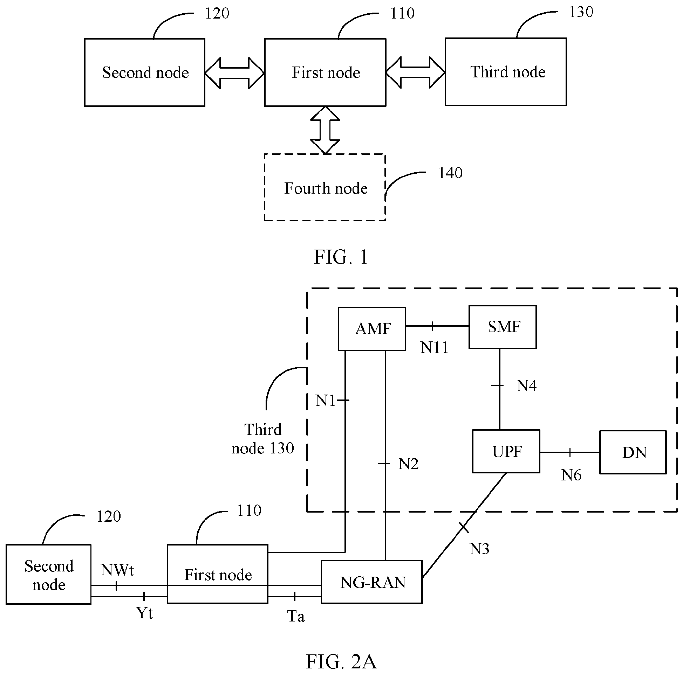

FIG. 1 shows an architecture of a communication system to which the communication method is applicable according to an embodiment of this application. The communication system may include a first node 110, a second node 120, and a third node 130.

The second node 120 may be a terminal node. The first node 110 may be an authorized node of the second node 120. Both the second node 120 and the first node 110 may support a first communication technology. The second node 120 and the first node 110 may form a first communication system. The two parties may communicate with each other by using the first communication technology. Both the first node 110 and the third node 130 may support a second communication technology. The first node 110 and the third node 130 may form a second communication system. The two parties may communicate with each other by using the second communication technology. The first communication technology is different from the second communication technology. In a converged communication scenario of the first communication technology and the second communication technology, a communication connection may be established between the first communication system and the second communication system, to form a heterogeneous communication system. The first node 110, the second node 120, and the third node 130 may execute a corresponding communication service and/or transmit communication service data in the heterogeneous communication system.

Optionally, the communication system may further include a fourth node 140. The fourth node 140 may directly communicate with the second node 120, or may indirectly communicate with the second node 120 via the first node 110, so as to provide a service for the second node 120.

The first communication technology and the second communication technology may be different technologies. Accordingly, the communication system in this application may be a communication system obtained after different communication systems are converged. For example, a wireless short-range communication technology is used as an example of the first communication technology, and a 5G cellular network communication technology is used as an example of the second communication technology. In this case, after the wireless short-range communication system and the 5G cellular network communication system are converged, a communication system applicable to embodiments of this application may be obtained.

The converged communication system may also be referred to as a tight interworking (tight interworking) communication system, or an interworking (interworking) communication system. In the converged communication system, a terminal node that supports wireless short-range communication may access a 5G network via a control node or a gateway node, and further use a service provided by the 5G network. In addition, the 5G network may further configure and manage a data transmission policy for the terminal node based on subscription information and link status information of the terminal node, so as to provide a service for the terminal node. In other words, in the converged communication system, the wireless short-range communication system and the 5G cellular network communication system may work interactively and complement each other's advantages.

Optionally, the wireless short-range communication system described in this application may be any possible short-range communication system, such as Bluetooth, wireless fidelity (wireless fidelity, Wi-Fi), an in-vehicle general-purpose short-range communication system, or a short-range communication system that is present or may appear in the future. Compared with a 5G communication system, the short-range communication system has a relatively small coverage range and a relatively short communication distance. This application does not specifically limit a communication distance or a coverage range of the short-range communication system, and is subject to a shorter communication distance than that of the 5G communication system.

For example, in FIG. 2A, the first communication technology is the short-range communication technology and the second communication technology is the 5G cellular network communication technology. The third node 130 may include at least one of function entities, such as a core network device including an AMF, an SMF, and a UPF, and a data network (data network, DN).

Each node or functional entity in FIG. 2A may be connected to each other through interfaces. A sequence number or a name of an interface is not limited in this embodiment of this application. An interface defined in a 3GPP-related standard protocol of a 5G system may be used, or an interface in a future communication system may be used. For example, the second node 120 may communicate with the first node 110 through a Yt interface, the first node 110 may communicate with a next generation radio access network (next generation radio access network, NG-RAN) through a Ta interface, and the second node 120 may communicate with the NG-RAN through an NWt interface. The second node 120 and the first node 110 may communicate with the AMF through a next generation (next generation, N) 1 interface (N1 for short), the NG-RAN communicates with the AMF through an N2 interface (N2 for short), the NG-RAN communicates with the local UPF through an N3 interface (N3 for short), and the UPF communicates with the DN through an N6 interface (N6 for short). The AMF communicates with the SMF through an N11 interface (N11 for short), and the SMF communicates with the UPF through an N4 interface (N4 for short). In this way, the 5G network can perceive key information of the second node 120 such as a device status, a network status, and a service status via the first node 110, so as to remotely achieve reachability, perception, and manageability of an onsite network and a service of an industry.

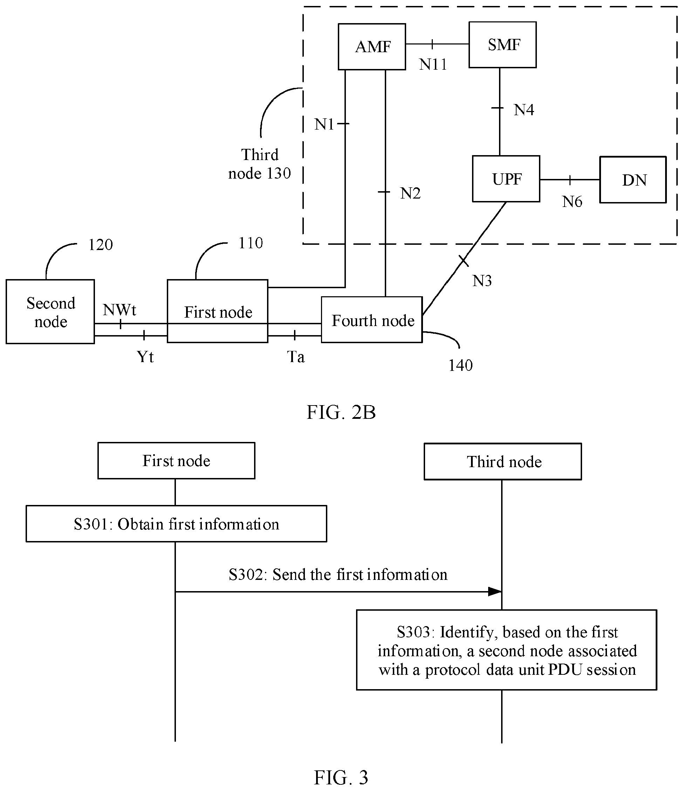

For another example, the communication system in FIG. 2B may further include a fourth node 140, and the fourth node 140 may be, for example, a TNGF node. The second node 120 may communicate with the first node 110 through the Yt interface, the first node 110 may communicate with the fourth node 140 through the Ta interface, and the second node 120 may communicate with the fourth node 140 through the NWt interface. In this way, the fourth node 140 can perceive key information of the second node 120 such as a device status, a network status, and a service status via the first node 110, so as to remotely achieve reachability, perception, and manageability of an onsite network and a service of an industry.

It should be noted that the foregoing is only an example to indicate that the heterogeneous communication system may include the first node 110, the second node 120, the third node 130, and the fourth node 140, and to indicate a communication manner between each node and functional modules of each node, and does not limit a quantity of nodes and a sequence number or a name of an interface. During specific implementation, quantities of the first node 110, the second node 120, the third node 130, and the fourth node 140 each may not be limited to 1.

Optionally, a terminal device in embodiments of this application may be a device configured to implement a wireless communication function, for example, a terminal or a chip that may be used in the terminal. For example, the terminal device may include a handheld device having a wireless connection function, or a processing device connected to a wireless modem. The terminal device may communicate with a core network through a radio access network (radio access network, RAN), and exchange a voice and/or data with the RAN. The terminal device may include user equipment (user equipment, UE), a wireless terminal device, a mobile terminal device, a subscriber unit (subscriber unit), a subscriber station (subscriber station), a mobile station (mobile station), a mobile (mobile) console, a remote station (remote station), an access point (access point, AP), a remote terminal device (remote terminal), an access terminal device (access terminal), a user terminal device (user terminal), a user agent (user agent), a user device (user device), or the like. For example, the terminal device may include a mobile phone (or referred to as a "cellular" phone), a computer with a mobile terminal device, a portable, pocket-sized, handheld, computer built-in, or vehicle-mounted mobile apparatus, or a smart wearable device. For example, the terminal device may be a device such as a personal communication service (personal communication service, PCS) phone, a cordless phone, a session initiation protocol (session initiation protocol, SIP) phone, a wireless local loop (wireless local loop, WLL) station, or a personal digital assistant (personal digital assistant, PDA). The terminal device further includes a limited device, for example, a device with low power consumption, a device with a limited storage capacity, or a device with a limited computing capability. For example, the terminal device includes an information sensing device such as a barcode, radio frequency identification (radio frequency identification, RFID), a sensor, a global positioning system (global positioning system, GPS), or a laser scanner.

As an example instead of a limitation, the terminal device in embodiments of this application may alternatively be a wearable device. The wearable device may also be referred to as a wearable smart device, which is a generic term for wearable devices that are developed through intelligent design on daily wearables by using wearable technologies, such as glasses, gloves, watches, clothing, and shoes. The wearable device is a portable device that is worn directly on a body or integrated into a user's clothing or accessories. The wearable device is not only a hardware device, but also implements a powerful function through software support, data exchange, and cloud interaction. In a broad sense, the wearable smart device includes a full-featured and large-sized device that can implement all or some of functions without relying on a smartphone, for example, a smart watch or smart glasses, and includes a device that focuses only on a specific type of application function and needs to be used together with another device such as a smartphone, for example, various types of smart bands, smart helmets, and smart jewelry for monitoring physical signs.

Optionally, a network device in embodiments of this application may include an access network (access network, AN) device and a radio access network (radio access network, RAN) device. The access network device such as a base station (for example, an access point) may be a device that communicates with a wireless terminal device through an air interface on an access network by using one or more cells. The base station may be configured to perform mutual conversion between a received over-the-air frame and an internet protocol (IP) packet, and is used as a router between the terminal device and a remaining part of the access network. The remaining part of the access network may include an IP network. A network side device may further coordinate attribute management of the air interface. For example, the network device may include an evolved NodeB (NodeB, eNB, or e-NodeB, evolved NodeB) in a long term evolution (long term evolution, LTE) system or a long term evolution-advanced (long term evolution-advanced, LTE-A) system; may include a next generation NodeB (next generation NodeB, gNB), a next generation evolved NodeB (next generation evolved NodeB, ng-eNB), or an en-gNB (enhanced next generation NodeB,·gNB): enhanced next generation NodeB in a 5th generation (5th generation, 5G) mobile communication technology new radio (new radio, NR) system; may include a central unit (central unit, CU) and a distributed unit (distributed unit, DU) on a cloud radio access network (cloud radio access network, Cloud RAN) system; or may further include a relay device. This is not limited in embodiments of this application.

The foregoing describes an application architecture involved in embodiments of this application, and the following describes the technical features in embodiments of this application.

FIG. 3 shows a first communication method according to an embodiment of this application. The method includes the following steps.

S301: A first node obtains first information.

The first information indicates a mapping relationship between a second node and the first node.

It may be understood that the mapping relationship between the second node and the first node is a mapping relationship between an identifier of the second node and specific information of the first node. The identifier of the second node may be a subscription permanent identifier (subscription permanent identifier, SUPI) or a subscription concealed identifier (subscription concealed identifier, SUCI). The SUPI may be an international mobile subscriber identity (international mobile subscriber identity, IMSI) or a network access identifier (network access identifier, NAI) uniformly allocated by a unified data storage (unified data repository, UDR) device or a unified data management (unified data management, UDM) device in a 5G communication system. The SUCI may be obtained by encrypting the SUPI. In other words, the SUCI may be understood as an encryption form of the SUPI, and can effectively improve communication security of the second node.

Alternatively, the identifier of the second node may be temporarily allocated by the first node to the second node. The identifier of the second node may be uniquely identified in a management domain of the first node. A specific form of the unique identifier allocated by the first node to the second node is not specifically limited in this embodiment of this application. For example, second nodes managed by the first node are a T node 1 and a T node 2, an identifier allocated by the first node to the T node 1 may be 001, and an identifier allocated by the first node to the T node 2 may be 002. For another example, second nodes managed by the first node are a T node 1 and a T node 2, an identifier allocated by the first node to the T node 1 may be A, and an identifier allocated by the first node to the T node 2 may be B.

The specific information of the first node may be, for example, any one of a first IP address, a first port number, a first MAC address, or an identifier of the first node. Accordingly, the mapping relationship may be, for example, a first mapping relationship between the identifier of the second node and the first IP address of the first node, or a second mapping relationship between the identifier of the second node and the first port number of the first node, or a third mapping relationship between the identifier of the second node and the first MAC address of the first node, or a mapping relationship between the identifier of the second node and a first identifier of the first node.

It may be understood that the first IP address is one of a plurality of public IP addresses allocated by the third node to the first node in a PDU session. The first port number is one of a plurality of port numbers allocated by the third node to the first node in the PDU session. The first MAC address is one of a plurality of MAC addresses derived by the first node based on a unique MAC address of the first node. The first identifier may be one of a plurality of identifiers temporarily allocated by the first node.

Accordingly, that the first information indicates a mapping relationship between a second node and the first node includes the following cases.

Case 1: The first information indicates the first mapping relationship between the identifier of the second node and the first IP address of the first node.

Case 2: The first information indicates the second mapping relationship between the identifier of the second node and the first port number of the first node.

Case 3: The first information indicates the third mapping relationship between the identifier of the second node and the first media access control MAC address of the first node.

Case 4: The first information indicates the mapping relationship between the identifier of the second node and the first identifier of the first node.

It may be understood that the first node obtains the first information in a plurality of implementations, including but not limited to the following manners.

Implementation 1: The first node determines, by interacting with the second node, a PDU session associated with the second node, and obtains the first information based on the PDU session and the identifier of the second node.

It may be understood that the first node obtains the first information based on the PDU session and the identifier of the second node. That is, the first node determines the mapping relationship between the first node and the second node based on the PDU session and the identifier of the second node.

In a possible implementation, the first node may receive access-side session request information or access-side session modification request information from the second node, to determine the PDU session associated with the second node. It may be understood that the access-side session request information indicates that the second node requests the first node to allocate a PDU session, and the access-side session modification request information indicates that the second node requests the first node to modify a PDU session. Accordingly, for example, the first node determines, based on the access-side session request information or the access-side session modification request information, whether there is a PDU session that meets a current service requirement of the second node. If there is a PDU session that meets the current service requirement of the second node, the first node may determine not to establish a new PDU session for the second node, and directly allocate the PDU session to the second node. If there is no PDU session that meets the current service requirement of the second node, the first node may determine to establish a new PDU session for the second node. Optionally, after determining the PDU session for the second node, the first node may further send related information (for example, an identifier and a type of the PDU session) of the PDU session to the second node.

A design of the provided mapping relationship between the first node and the second node in this embodiment of this application includes but is not limited to the following manners.

Design 1: The first node establishes the first mapping relationship between the identifier of the second node and the first IP address of the first node based on the identifier of the second node and the first IP address associated with the PDU session.

It should be noted that, in Design 1, the PDU session associated with the second node includes the plurality of public IP addresses of the first node. That is, the third node allocates the plurality of public IP addresses to the first node in the PDU session, so that the first node may allocate a corresponding public IP address (that is, the first IP address) to the second node managed by the first node, and the first node establishes the first mapping relationship between the identifier of the second node and the first IP address of the first node based on the identifier of the second node and the first IP address associated with the PDU session.

For example, Table 1 shows an example of the first mapping relationship. In Table 1, for example, second nodes are a T node 1, a T node 2, and a T node 3. The third node allocates three public IP addresses to the first node in one PDU session: an IP1, an IP2, and an IP3. The first node may allocate a corresponding public IP address to a second node managed by the first node. For example, the first node allocates the IP1 to the T node 1, the first node allocates the IP2 to the T node 2, and the first node allocates the IP3 to the T node 3. Therefore, the first node may establish the first mapping relationship shown in Table 1.

**Table 1**

| Identifier of the second node | First IP address of the first node |
|---|---|
| Identifier of the T node 1 | IP1 |
| Identifier of the T node 2 | IP2 |
| Identifier of the T node 3 | IP3 |

Design 2: The first node establishes the second mapping relationship between the identifier of the second node and the first port number of the first node based on the identifier of the second node and the first port number associated with the PDU session.

It should be noted that, in Design 2, the PDU session associated with the second node includes not only one public IP address of the first node, but also includes the plurality of port numbers of the first node. That is, the third node allocates the plurality of port numbers to the first node in the PDU session, and the first node may allocate a port number to the second node managed by the first node, so that the first node may establish the second mapping relationship between the identifier of the second node and the first port number of the first node.

For example, Table 2 shows an example of the second mapping relationship. In Table 2, for example, second nodes are a T node 1, a T node 2, and a T node 3. The third node allocates three port numbers: a P1, a P2, and a P3 to the first node in one PDU session. The first node may allocate a corresponding port number to a second node managed by the first node. For example, the first node allocates the P1 to the T node 1, the first node allocates the P2 to the T node 2, and the first node allocates the P3 to the T node 3. Therefore, the first node may establish the second mapping relationship shown in Table 2.

**Table 2**

| Identifier of the second node | Port number of the first node |
|---|---|
| Identifier of the T node 1 | P1 |
| Identifier of the T node 2 | P2 |
| Identifier of the T node 3 | P3 |

Design 3: The first node establishes the third mapping relationship between the identifier of the second node and the first MAC address of the first node based on the identifier of the second node and the first MAC address.

It should be noted that, in Design 3, the first MAC address is one of the plurality of MAC addresses derived by the first node based on the unique MAC address of the first node, and the first node may allocate a MAC address to the second node managed by the first node, so that the first node may establish the third mapping relationship between the identifier of the second node and the first MAC address of the first node.

For example, Table 3 shows an example of the third mapping relationship. In Table 3, for example, second nodes are a T node 1, a T node 2, and a T node 3. The first node derives three MAC addresses based on the unique MAC address of the first node: a MAC address A, a MAC address B, and a MAC address C. The first node may allocate a corresponding MAC address to a second node managed by the first node. For example, the first node allocates the MAC address A to the T node 1, the first node allocates the MAC address B to the T node 2, and the first node allocates the MAC address C to the T node 3. Therefore, the first node may establish the third mapping relationship shown in Table 3.

**Table 3**

| Identifier of the second node | MAC address of the first node |
|---|---|
| Identifier of the T node 1 | MAC address A |
| Identifier of the T node 2 | MAC address B |
| Identifier of the T node 3 | MAC address C |

Design 4: The first node establishes the mapping relationship between the identifier of the second node and the first identifier of the first node based on the identifier of the second node and the first identifier.

It should be noted that, in Design 4, the first identifier is one of the plurality of identifiers that are temporarily allocated, and the first node may allocate a temporary identifier to the second node managed by the first node, so that the first node may establish the mapping relationship between the identifier of the second node and the first identifier of the first node. For example, Table 4 shows an example of the mapping relationship. In Table 4, for example, second nodes are a T node 1, a T node 2, and a T node 3. The first node temporarily allocates three identifiers: 01, 02, and 03. The first node may allocate a corresponding temporary identifier to a second node managed by the first node. For example, the first node allocates the identifier 01 to the T node 1, the first node allocates the identifier 02 to the T node 2, and the first node allocates the identifier 03 to the T node 3. Therefore, the first node may establish the mapping relationship shown in Table 4.

**Table 4**

| Identifier of the second node | Temporary identifier of the first node |
|---|---|
| Identifier of the T node 1 | 01 |
| Identifier of the T node 2 | 02 |
| Identifier of the T node 3 | 03 |

In Implementation 1, the first node exchanges information with the second node to obtain the first information, so that the first information may be updated in a timely manner, thereby better adapting to a requirement of the second node.

Implementation 2: The first node has in advance managed or maintained a PDU session associated with the second node, and the first node may directly obtain the first information based on the PDU session and the identifier of the second node. A corresponding example of "the first node may directly obtain the first information based on the PDU session and the identifier of the second node" is similar to that in Implementation 1. For details, refer to the foregoing related descriptions. Details are not described herein again.

In Implementation 2, efficiency of obtaining the first information by the first node is relatively high.

S302: The first node sends the first information to the third node. Accordingly, the third node receives the first information.

In a possible implementation, the first information is carried in a non-access stratum NAS message. In other words, the first node may send the first information to the third node through a NAS message. The NAS message is any one of NAS messages in a PDU session establishment procedure, a PDU session modification procedure, and a registration procedure. For example, the NAS message may include but is not limited to any one of a registration request message, an access session request message, a PDU session establishment request message, a PDU session modification request message, and PDU session update information. This is not specifically limited in this embodiment of this application.

For example, when the first information indicates the first mapping relationship between the identifier of the second node and the first IP address of the first node, or the second mapping relationship between the identifier of the second node and the first port number of the first node, the first information may be carried in the PDU session update information. For another example, when the first information indicates the third mapping relationship between the identifier of the second node and the first MAC address of the first node, or the mapping relationship between the identifier of the second node and the first identifier of the first node, the first information may be carried in any NAS information obtained after the first node is successfully registered.

S303: The third node identifies, based on the first information, the second node associated with the PDU session.

In this embodiment of this application, the third node identifies the second node associated with the PDU session. That is, the third node identifies the second node associated with user-plane data.

Manner 1: The third node may directly identify, based on the mapping relationship indicated by the first information, the second node associated with the PDU session. For example, the third node may identify, based on the first mapping relationship, the second node associated with the PDU session. For another example, the third node may identify, based on the second mapping relationship, the second node associated with the PDU session. For another example, the third node may identify, based on the third mapping relationship, the second node associated with the PDU session.

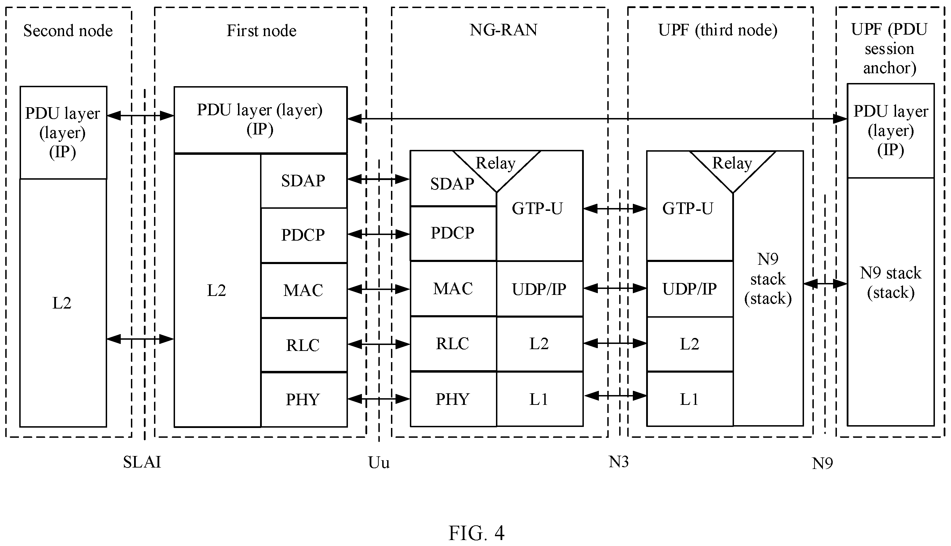

FIG. 4 shows a user-plane protocol architecture to which the first communication method is applicable according to an embodiment of this application. In FIG. 4, for example, the third node is a UPF.

The user-plane protocol architecture includes, from top to bottom, a service data adaptation protocol (service data adaptation protocol, SDAP) layer, a packet data convergence protocol (packet data convergence protocol, PDCP) layer, a radio link control (Radio link control, RLC) layer, a media access control (medium access control, MAC) layer, a physical layer (physical layer, PHY), and the like. A PDU layer (layer) is used to carry an IP data packet of the PDU session.

An N9 stack is an N9 protocol stack, and an N9 interface is an interface between 5G core network elements. A user datagram protocol (user datagram protocol, UDP)/internet protocol (internet protocol, IP) is a data transmission protocol. The UDP indicates unreliable data transmission (different from a TCP, the TCP is reliable transmission). The IP provides an addressing manner for data transmission, and data routing and addressing are performed based on the IP. A GPRS tunnelling protocol on a user plane (GPRS tunnelling protocol-user, GTP-U) provides a data encapsulation manner. A GTP-U frame structure may include tunnelling information, a message type, a sequence number, and the like. An L1 layer refers to a physical layer, is a lowest layer in a computer network model, and provides mechanical, electronic, functional, and standard features for creating, maintaining, and removing physical links required for data transmission. In brief, the physical layer ensures that original data may be transmitted over a variety of physical media. An L2 layer refers to a data link layer, is a second layer in a computer network reference model, and is between a physical layer and a network layer. The data link layer provides a service for the network layer based on a service provided by the physical layer. A basic service of the data link layer is to reliably transmit data from the network layer to a network layer of a target machine of an adjacent node. The L1 and the L2 may be configured to receive and send data at a link layer. The relay (Relay) may relay received information.

The first node and the second node may communicate with each other by using a communication link (sparkLinkL2) protocol. The first node may communicate with an NG-RAN at the SDAP layer, the PDCP layer, the RLC layer, the MAC layer, and the physical layer. The NG-RAN communicates with the UPF (the third node) by using the UDP/IP, the GTP-U, the L2, and the L1. The NG-RAN and the UPF (the third node) may further relay received and sent data by using the relay. Therefore, the second node may indirectly obtain, via the first node, a service provided by the third node.

In a case, if the first node allocates a public IP address of the first node to the second node, the first node may encapsulate the public IP address of the first node in a data packet of the PDU layer. In this way, after receiving the corresponding IP data packet, the UPF may identify, based on the public IP address of the first node in the IP data packet and the first mapping relationship between the identifier of the second node and the first IP address of the first node, the second node associated with the PDU session.

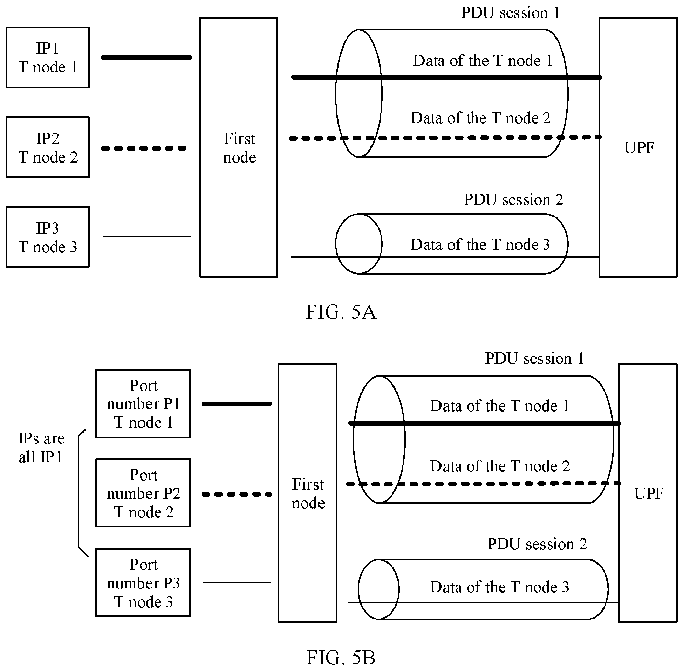

Example 1: With reference to FIG. 5A, for example, second nodes are a T node 1, a T node 2, and a T node 3. A plurality of PDU sessions may be established between the UPF and the first node. For example, a PDU session 1 and a PDU session 2 may exist. The PDU session 1 is used to transmit data of the T node 1 and the T node 2, and the PDU session 2 is used to transmit data of the T node 3. That is, the PDU session 1 is associated with the T node 1 and the T node 2, and the PDU session 2 is associated with the T node 3. The PDU session 1 includes IP addresses of the first node: an IP1 and an IP2, and the PDU session 2 includes an IP address of the first node: an IP3. The first node allocates the IP1 to the T node 1, the first node allocates the IP2 to the T node 2, and the first node allocates the IP3 to the T node 3.

For example, if the public IP address of the first node in the IP data packet that is of the PDU session 1 and that is received by the UPF is the IP1, the UPF may determine, based on the first mapping relationship between the identifier of the second node and the first IP address of the first node, that the second node associated with the PDU session 1 is the T node 1. For another example, if the public IP address of the first node in the IP data packet that is of the PDU session 1 and that is received by the UPF is the IP2, the UPF may determine, based on the first mapping relationship between the identifier of the second node and the first IP address of the first node, that the second node associated with the PDU session 1 is the T node 2. For another example, if the public IP address of the first node in the IP data packet that is of the PDU session 2 and that is received by the UPF is the IP3, the UPF may determine, based on the first mapping relationship between the identifier of the second node and the first IP address of the first node, that the second node associated with the PDU session 2 is the T node 3.

In another case, if the first node allocates a port number of the first node to the second node, the first node may encapsulate the port number of the first node in a data packet of the PDU layer. In this way, after receiving the IP data packet, the UPF may identify, based on the port number of the first node in the IP data packet and the second mapping relationship between the identifier of the second node and the first port number of the first node, the second node associated with the PDU session.

Example 2: With reference to FIG. 5B, for example, second nodes are a T node 1, a T node 2, and a T node 3. A plurality of sessions may be established between the UPF and the first node. For example, a PDU session 1 and a PDU session 2 may exist. The PDU session 1 is used to transmit data of the T node 1 and the T node 2, and the PDU session 2 is used to transmit data of the T node 3. That is, the PDU session 1 is associated with the T node 1 and the T node 2, and the PDU session 2 is associated with the T node 3. The PDU session 1 and the PDU session 2 include a same IP address of the first node: an IP1. The PDU session 1 includes port numbers of the first node: a P1 and a P2. The PDU session 2 includes a port number of the first node: a P3. The first node allocates the P1 to the T node 1, the first node allocates the P2 to the T node 2, and the first node allocates the P3 to the T node 3.

For example, if the port number of the first node in the IP data packet that is of the PDU session 1 and that is received by the UPF is the P1, the UPF may determine, based on the second mapping relationship between the identifier of the second node and the first port number of the first node, that the second node associated with the PDU session 1 is the T node 1. For another example, if the port number of the first node in the IP data packet that is of the PDU session 1 and that is received by the UPF is the P2, the UPF may determine, based on the second mapping relationship between the identifier of the second node and the first port number of the first node, that the second node associated with the PDU session 1 is the T node 2. For another example, if the port number of the first node in the IP data packet that is of the PDU session 2 and that is received by the UPF is the P3, the UPF may determine, based on the second mapping relationship between the identifier of the second node and the first port number of the first node, that the second node associated with the PDU session 2 is the T node 3.

In another case, if the first node allocates a MAC address of the first node to the second node, the first node may encapsulate the MAC address of the first node in a data packet of the PDU layer. In this way, after receiving the IP data packet, the UPF may identify, based on the MAC address of the first node in the IP data packet and the third mapping relationship between the identifier of the second node and the first MAC address of the first node, the second node associated with the PDU session.

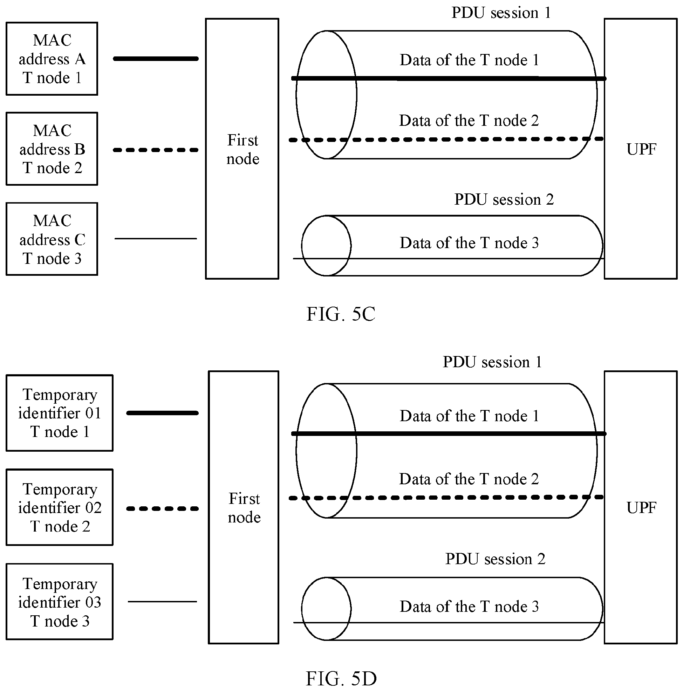

Example 3: With reference to FIG. 5C, for example, second nodes are a T node 1, a T node 2, and a T node 3. A plurality of sessions may be established between the UPF and the first node. For example, a PDU session 1 and a PDU session 2 may exist. The PDU session 1 is used to transmit data of the T node 1 and the T node 2, and the PDU session 2 is used to transmit data of the T node 3. That is, the PDU session 1 is associated with the T node 1 and the T node 2, and the PDU session 2 is associated with the T node 3. The PDU session 1 and the PDU session 2 include a same IP address of the first node: an IP1. Temporary MAC addresses derived by the first node based on the unique MAC address of the first node include a MAC address A, a MAC address B, and a MAC address C. The first node allocates the MAC address A to the T node 1, the first node allocates the MAC address B to the T node 2, and the first node allocates the MAC address C to the T node 3. Accordingly, the PDU session 1 is used to transmit data of the T node 1 and the T node 2, and the PDU session 2 is used to transmit data of the T node 3. That is, the PDU session 1 is associated with the T node 1 and the T node 2, and the PDU session 2 is associated with the T node 3.

For example, if the MAC address of the first node in the IP data packet that is of the PDU session 1 and that is received by the UPF is A, the UPF may determine, based on the third mapping relationship between the identifier of the second node and the first MAC address of the first node, that the second node associated with the PDU session 1 is the T node 1. For another example, if the MAC address of the first node in the IP data packet that is of the PDU session 1 and that is received by the UPF is B, the UPF may determine, based on the third mapping relationship between the identifier of the second node and the first MAC address of the first node, that the second node associated with the PDU session 1 is the T node 2. For another example, if the MAC address of the first node in the IP data packet that is of the PDU session 2 and that is received by the UPF is C, the UPF may determine, based on the third mapping relationship between the identifier of the second node and the first MAC address of the first node, that the second node associated with the PDU session 2 is the T node 3.

In another case, if the first node allocates a temporary identifier of the first node to the second node, the first node may encapsulate the identifier of the first node in a data packet of the PDU layer. In this way, after receiving the IP data packet, the UPF may identify, based on the identifier of the first node in the IP data packet and the mapping relationship between the identifier of the second node and the first identifier of the first node, the second node associated with the PDU session.

Example 4: With reference to FIG. 5D, for example, second nodes are a T node 1, a T node 2, and a T node 3. A plurality of sessions may be established between the UPF and the first node. For example, a PDU session 1 and a PDU session 2 may exist. The PDU session 1 is used to transmit data of the T node 1 and the T node 2, and the PDU session 2 is used to transmit data of the T node 3. That is, the PDU session 1 is associated with the T node 1 and the T node 2, and the PDU session 2 is associated with the T node 3. The PDU session 1 and the PDU session 2 include a same IP address of the first node: an IP1. The first node has temporary identifiers: 01, 02, and 03. The first node allocates the temporary identifier 01 to the T node 1, the first node allocates the temporary identifier 02 to the T node 2, and the first node allocates the temporary identifier 03 to the T node 3.

For example, if the temporary identifier of the first node in the IP data packet that is of the PDU session 1 and that is received by the UPF is 01, the UPF may determine, based on the mapping relationship between the identifier of the second node and the first identifier of the first node, that the second node associated with the PDU session 1 is the T node 1. For another example, if the temporary identifier of the first node in the IP data packet that is of the PDU session 1 and that is received by the UPF is 02, the UPF may determine, based on the mapping relationship between the identifier of the second node and the first identifier of the first node, that the second node associated with the PDU session 1 is the T node 2. For another example, if the temporary identifier of the first node in the IP data packet that is of the PDU session 2 and that is received by the UPF is 03, the UPF may determine, based on the mapping relationship between the identifier of the second node and the first identifier of the first node, that the second node associated with the PDU session 2 is the T node 3.

In Manner 1, efficiency of identifying the second node by the third node is relatively high.

Manner 2: When allocating the PDU session to the second node (for example, in the PDU session establishment or PDU session modification procedure), the first node further configures a packet filter packetfilter(s) (which may also be referred to as a filtering policy) for the second node, so that the second node in the PDU session is associated with the packet filter. The packet filter may be used to screen or determine a QoS flow corresponding to the second node in the PDU session, and the QoS flow is used to transmit data associated with the second node. In this way, the third node may identify, based on the packet filter and the mapping relationship between the first node and the second node, the second node associated with the PDU session.

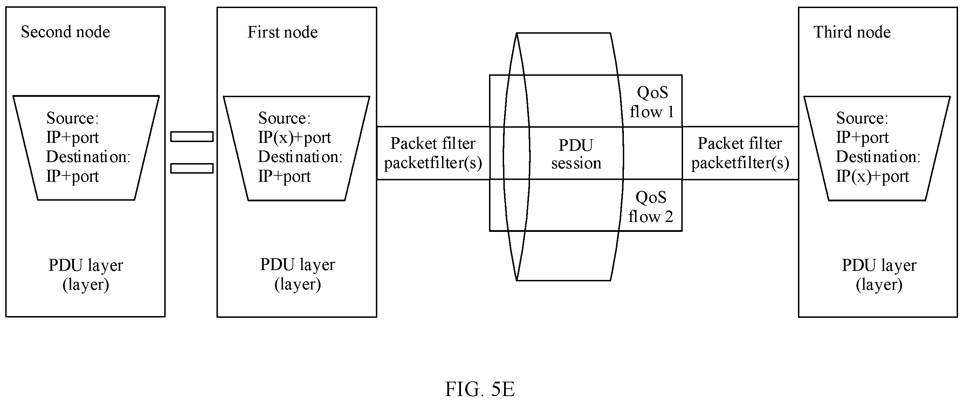

For example, with reference to FIG. 5E, QoS flows corresponding to the second node in the PDU session are a QoS flow 1 and a QoS flow 2. The first node sends, to the third node, a packet filter configured by the first node for the second node. The third node may screen the QoS flow 1 and the QoS flow 2 based on the packet filter, so that the third node determines that a service flow corresponding to the second node is placed in the QoS flow 1 and the QoS flow 2 for transmission.

In addition, if the packet filter includes the public IP address of the first node, the third node may identify, based on the public IP address of the first node in the packet filter and the first mapping relationship between the identifier of the second node and the first IP address of the first node, the second node associated with the PDU session; or if the packet filter includes the port number (port) of the first node, the third node may identify, based on the port number (port) of the first node in the packet filter and the second mapping relationship between the identifier of the second node and the first port number of the first node, the second node associated with the PDU session; or if the packet filter includes the MAC address of the first node, the third node may identify, based on the MAC address of the first node in the packet filter and the third mapping relationship between the identifier of the second node and the first MAC address of the first node, the second node associated with the PDU session; or if the packet filter includes the temporary identifier of the first node, the third node may identify, based on the temporary identifier of the first node in the packet filter and the mapping relationship between the identifier of the second node and the first identifier of the first node, the second node associated with the PDU session.

In Manner 2, the third node may identify, based on the packet filter and the mapping relationship between the first node and the second node, the second node associated with the PDU session, thereby effectively improving accuracy of identifying the second node by the third node.

In the embodiment shown in FIG. 3, the first node may send the mapping relationship between the second node and the first node to a core network, so that the third node may identify (that is, perceive or manage) the second node, thereby managing a service provided by the second node, to better meet a requirement of the second node.

It should be noted that the third node and the first node have maintained or managed the mapping relationship between the second node and the first node, the second node needs to include the identifier of the second node in control information to be reported to the third node. The third node may also identify, based on the mapping relationship and the identifier of the second node, data associated with the second node, so that the third node may accordingly adjust configuration information (for example, a QoS flow related parameter) of the second node.

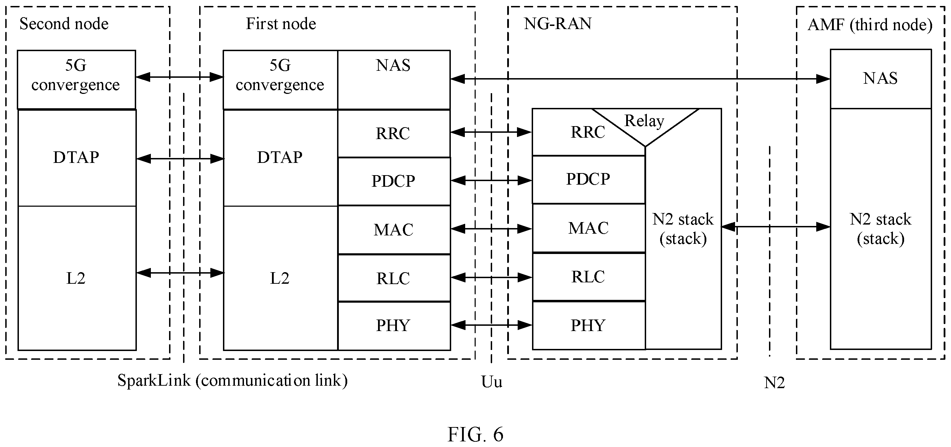

FIG. 6 shows a control-plane protocol architecture to which the first communication method is applicable according to an embodiment of this application. In FIG. 6, for example, the third node is an AMF. The control-plane protocol architecture includes, from top to bottom, a radio resource control (radio resource control, RRC) layer, a PDCP layer, an RLC layer, a MAC layer, a PHY layer, and the like. An N2stack is an N2 protocol stack, and an N2 interface is an interface between a 5G core network element and an NG-RAN

The first node and the second node may communicate with each other by using any one of a communication link (sparkLinkL2) protocol, a direct transfer application part (direct transfer application part, DTAP) protocol, and 5G convergence.

The first node may communicate with the NG-RAN at the RRC layer, the PDCP layer, the RLC layer, the MAC layer, and the physical layer. The NG-RAN communicates with the AMF (the third node) through the N2stack interface. Therefore, the second node may indirectly obtain, via the first node, a service provided by the third node.

The second node does not support NAS signaling, and the first node and the AMF support NAS signaling. Therefore, the second node may send to-be-reported control information of the AMF to the first node, and the first node sends both the control information and the identifier of the second node to the AMF based on NAS information. In this way, the AMF may identify, based on the identifier of the second node and the mapping relationship between the second node and the first node, data (for example, a QoS flow) associated with the second node.

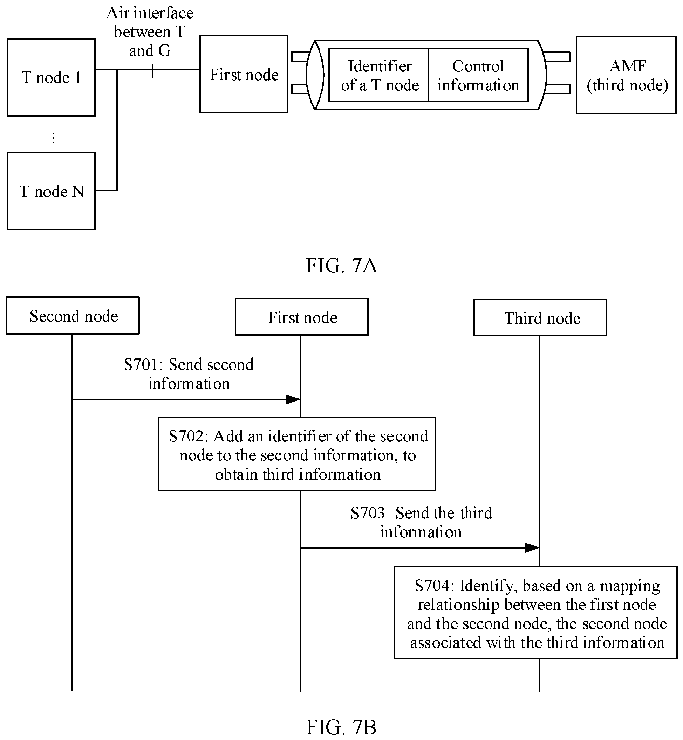

For ease of understanding, FIG. 7A further provides a corresponding schematic diagram of a scenario. In FIG. 7A, for example, second nodes are a T node 1 to a T node N. The first node may send an identifier of a T node and control information corresponding to the T node to the AMF at the same time, so that the AMF may identify, based on the identifier of the second node and the mapping relationship between the first node and the identifier of the second node, data associated with the second node.

With reference to specific accompanying drawings, the following describes in detail a process in which the third node identifies the second node associated with the control information.

For example, FIG. 7B shows a communication procedure between the second node and the third node when there is no PDU session.

S701: The second node sends second information to the first node. Accordingly, the first node receives the second information.

In a possible implementation, the second information includes link status information and/or node status information. The link status information includes at least one of a short-range measurement amount (short-range air interface status information) and a link status measurement amount between a short-range node and a 5G core network. The short-range measurement amount includes at least one of a reference signal received power (reference signal received power, RSRP), a reference signal received quality (reference signal received quality, RSRQ), a signal to interference plus noise ratio (signal to interference plus noise ratio, SINR), a channel quality indicator (channel quality indicator, CQI), a precoding matrix indicator (precoding matrix indicator, PMI), a rank indication (rank indication, RI), and a timestamp. The link status measurement amount between the short-range node and the 5G core network includes at least one of a round-trip delay (round-trip time, RTT), a packet loss rate, a jitter, and a timestamp.

For example, the second node may send the second information to the first node by using a Bluetooth technology or a Wi-Fi technology.

S702: The first node adds the identifier of the second node to the second information, to obtain third information.

For example, the first node may add the identifier of the second node to a header or a tail of a data packet corresponding to the second information, to obtain the third information.

S703: The first node sends the third information to the third node. Accordingly, the third node receives the third information.

In a possible implementation, the third information may be carried in a NAS message. In other words, the first node may send the third information to the third node through the NAS message.

S704: The third node identifies, based on the mapping relationship between the first node and the second node, the second node associated with the third information.

It may be understood that the mapping relationship between the first node and the second node is determined by the third node based on the pre-received first information.

In a possible implementation, that the first information indicates a mapping relationship between a second node and a first node includes: The first information indicates a first mapping relationship between an identifier of the second node and a first IP address of the first node; or the first information indicates a second mapping relationship between an identifier of the second node and a first port number of the first node; or the first information indicates a third mapping relationship between an identifier of the second node and a first media access control MAC address of the first node; or the first information indicates a mapping relationship between an identifier of the second node and a first identifier of the first node. Accordingly, the third node may identify, based on the identifier of the second node and the first mapping relationship, the second node associated with the third information; or identify, based on the identifier of the second node and the second mapping relationship, the second node associated with the third information; or identify, based on the identifier of the second node and the third mapping relationship, the second node associated with the third information; or identify, based on the identifier of the second node and the mapping relationship between the identifier of the second node and the first identifier of the first node, the second node associated with the third information.

In the embodiment shown in FIG. 7B, after the third node has maintained the mapping relationship between the first node and the second node, the first node may add the identifier of the second node to the control information of the second node, and send the identifier and control information to the third node. In this way, the third node may identify, based on the first information, data associated with the second node, so that the third node accordingly adjusts the configuration information of the second node.

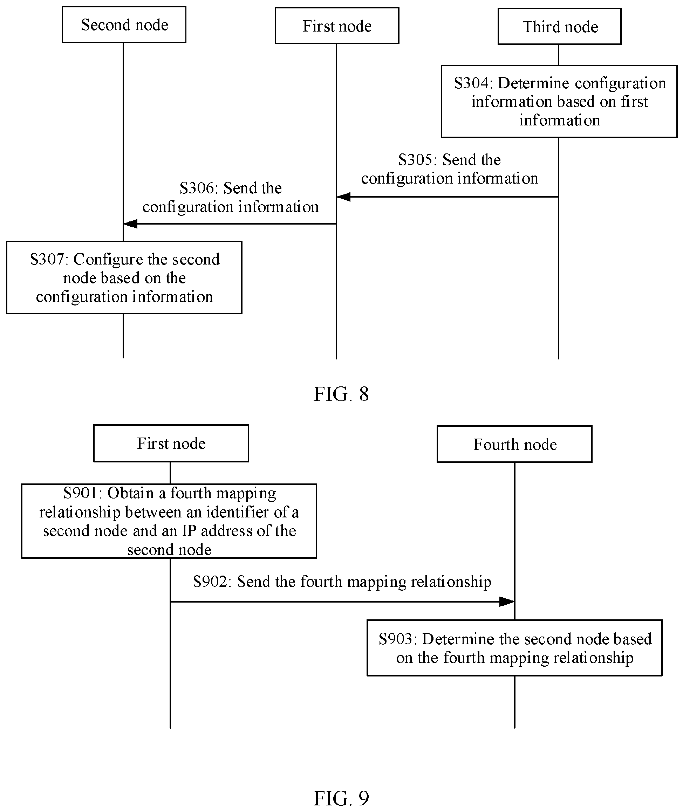

Further, with reference to FIG. 8, the first communication method provided in this embodiment of this application may further include the following steps.

S304: The third node determines configuration information based on the first information.

The configuration information includes at least one of running status management information, node parameter update information, a link status detection policy, a node status reporting policy, and a QoS configuration policy of the second node. The following provides an example for describing the information.

The running status management information includes any one of a power-on state, a power-off state, and a sleep state of the second node.

The node status update information includes update information corresponding to any one of version information, power information, hardware information, and software information of the second node.

The link status detection policy includes at least one of a measurement object, a reporting object, a reporting threshold, a reporting period, and an event parameter.

The node status reporting policy includes at least one of a reporting object, a reporting period, and a reporting event.

The QoS configuration policy includes a correspondence between the second node and the QoS flow in the PDU session.

S305: The third node sends the configuration information to the first node. Accordingly, the first node receives the configuration information.

S306: The first node sends the configuration information to the second node. Accordingly, the second node receives the configuration information.

For example, the first node may send the configuration information to the second node in a Bluetooth manner.

S307: The second node configures the second node based on the configuration information.

Example 1: When the configuration information includes the running status management information of the second node, the second node may configure a running status of the second node based on the running status management information.

Example 2: When the configuration information includes the node parameter update information of the second node, the second node may configure a node parameter (for example, version information, power information, hardware information, and software information) of the second node based on the node parameter update information.

Example 3: When the configuration information includes the link status detection policy of the second node, the second node may configure a link status monitoring mechanism of the second node based on the link status detection policy, for example, configure at least one of the measurement object, the reporting object, the reporting threshold, the reporting period, and the event parameter.

Example 4: When the configuration information includes the node status reporting policy of the second node, the second node may configure a node status reporting mechanism of the second node based on the node status reporting policy, for example, configure at least one of the reporting object, the reporting period, and the reporting event.

Example 5: When the configuration information includes the QoS configuration policy of the second node, the second node may configure, based on the QoS configuration policy, a transmission channel used for data associated with the second node, or adjust the transmission channel used for data associated with the second node.

Example 6: When the configuration information includes the running status management information and the node parameter update information of the second node, the second node may configure a running status of the second node based on the running status management information, and the second node may configure a node parameter (for example, version information, power information, hardware information, and software information) of the second node based on the node parameter update information.

Example 7: When the configuration information includes the link status detection policy and the node status reporting policy of the second node, the second node may configure a link status monitoring mechanism of the second node based on the link status detection policy, for example, configure at least one of the measurement object, the reporting object, the reporting threshold, the reporting period, and the event parameter. In addition, the second node may configure a node status reporting mechanism of the second node based on the node status reporting policy, for example, configure at least one of the reporting object, the reporting period, and the reporting event.

Example 8: When the configuration information includes the link status detection policy, the node status reporting policy, and the QoS configuration policy of the second node, the second node may configure a link status monitoring mechanism of the second node based on the link status detection policy, for example, configure at least one of the measurement object, the reporting object, the reporting threshold, the reporting period, and the event parameter. In addition, the second node may configure a node status reporting mechanism of the second node based on the node status reporting policy, for example, configure at least one of the reporting object, the reporting period, and the reporting event. In addition, the second node may configure, based on the QoS configuration policy, a transmission channel used for data associated with the second node, or adjust the transmission channel used for data associated with the second node.

Example 9: When the configuration information includes the running status management information, the node parameter update information, the link status detection policy, the node status reporting policy, and the QoS configuration policy of the second node, the second node may configure a running status of the second node based on the running status management information. In addition, the second node may configure a node parameter of the second node based on the node parameter update information. In addition, the second node may configure a link status monitoring mechanism of the second node based on the link status detection policy. In addition, the second node may configure a node status reporting mechanism of the second node based on the node status reporting policy. In addition, the second node may configure, based on the QoS configuration policy, a transmission channel of data associated with the second node.

It may be understood that, in another example, the configuration information may further include another parameter. This is not specifically limited in this embodiment of this application.

By performing steps S304 to S307, the third node may manage and control at least one of the running status management information, the node parameter update information, the link status detection policy, the node status reporting policy, and the QoS configuration policy of the second node, so that the third node may provide the second node with a service that is more adaptive to the second node.

The foregoing describes the communication method for identifying the second node by the third node. The following describes a communication method for identifying a second node by a fourth node with reference to specific accompanying drawings.

FIG. 9 shows a second communication method according to an embodiment of this application. The method is performed by a first node and a fourth node. The method includes the following steps.

S901: The first node may obtain a fourth mapping relationship between an identifier of a second node and an IP address of the second node.

For example, Table 5 shows an example of the fourth mapping relationship. In Table 5, for example, second nodes are a T node 1, a T node 2, and a T node 3. A private IP address corresponding to the T node 1 is an IP4, a private IP address corresponding to the T node 2 is an IP5, and a private IP address corresponding to the T node 3 is an IP6. In this case, the first node may establish the mapping relationship shown in Table 5.

**Table 5**

| Identifier of the second node | Private IP address of the second node |
|---|---|
| Identifier of the T node 1 | IP4 |
| Identifier of the T node 2 | IP5 |
| Identifier of the T node 3 | IP6 |

S902: The first node sends the fourth mapping relationship to the fourth node. Accordingly, the fourth node receives the fourth mapping relationship.

S903: The fourth node determines the second node based on the fourth mapping relationship.

For example, after receiving a data packet of the second node, the fourth node may identify the second node based on the private IP address included in the data packet of the second node and the fourth mapping relationship.

According to the method, the fourth node may determine the second node based on the IP address of the second node and the fourth mapping relationship between the identifier of the second node and the IP address of the second node, so that the fourth node may identify (that is, perceive or manage) the second node, thereby better providing a service for the second node.

In some possible embodiments, a third node allocates only one public IP address to the first node in a PDU session, and the first node may allocate a private IP address to a second node managed by the first node. In this way, the first node may establish a fifth mapping relationship between the identifier of the second node and the private IP address of the second node, and send the fifth mapping relationship to the third node. The third node maintains or manages a first correspondence between the PDU session and the public IP address of the first node, and maintains or manages a second correspondence between the public IP address of the first node and the private IP address of the second node. In this way, after receiving the fifth mapping relationship, the third node may maintain a third correspondence between a PDU session identifier and the private IP address of the second node based on the first correspondence, the second correspondence, and the fifth mapping relationship. Therefore, when receiving a packet filter associated with the PDU session, the third node may identify the second node based on the third correspondence and the private IP address that is of the second node and that is included in the packet filter.

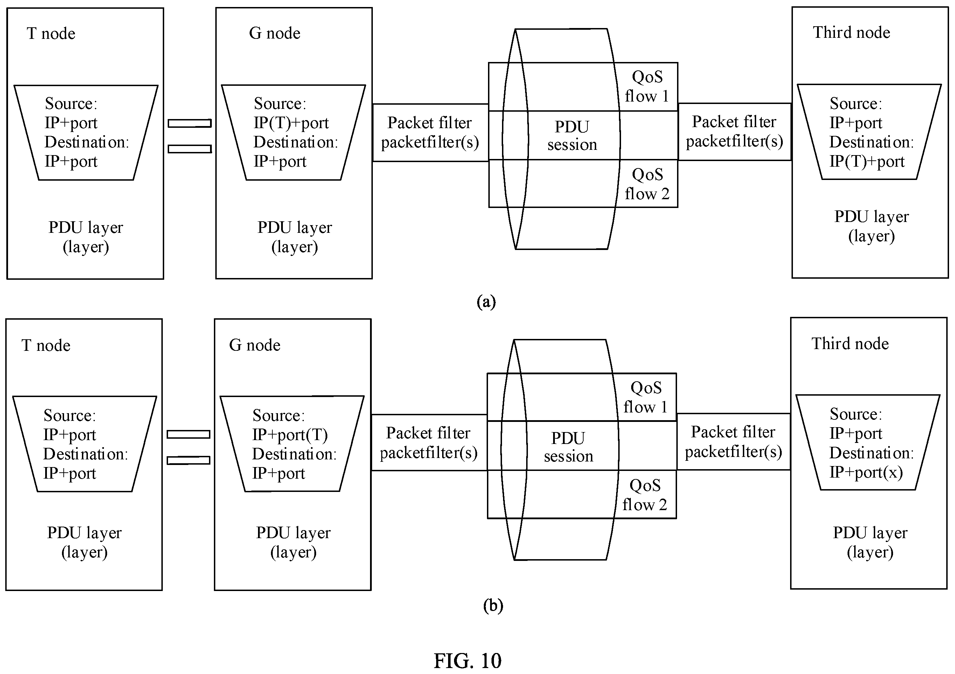

For example, with reference to FIG. 10, QoS flows corresponding to the second node (that is, a T node) in the PDU session are a QoS flow 1 and a QoS flow 2. The first node sends, to the third node, a packet filter configured by the first node for the T node, and the packet filter may include a private IP address IP(T) of the T node. In this way, the third node may screen, based on the packet filter, the QoS flow 1 and the QoS flow 2 corresponding to the T node, and the third node may place a service flow corresponding to the T node in the QoS flow 1 and the QoS flow 2 for transmission.

For example, in Table 6, second nodes are a T node 1, a T node 2, and a T node 3. A private IP address corresponding to the T node 1 is an IP7, a private IP address corresponding to the T node 2 is an IP8, and a private IP address corresponding to the T node 3 is an IP9. The private IP addresses are the IP7, the IP8, and the IP9. All the private IP addresses are associated with a public IP address IP1 of the first node, and the public IP address IP1 is associated with a PDU session 1. For example, the private IP address of the second node that is included in a filtered data packet associated with the PDU session 1 and that is received by the third node is the IP7, and the third node may identify the second node as the T node 1. For another example, the private IP address of the second node that is included in a filtered data packet associated with the PDU session 1 and that is received by the third node is the IP8, and the third node may identify the second node as the T node 2. For another example, the private IP address of the second node that is included in a filtered data packet associated with the PDU session 1 and that is received by the third node is the IP9, and the third node may identify the second node as the T node 3.

**Table 6**

| Identifier of the second node | Private IP address of the second node | Public IP address of the first node | PDU session identifier |
|---|---|---|---|
| Identifier of the T node 1 | IP7 | IP1 | PDU session 1 |
| Identifier of the T node 2 | IP8 | | |
| Identifier of the T node 3 | IP9 | | |

An apparatus provided in embodiments of this application is described below in detail with reference to the accompanying drawings. It should be understood that descriptions of apparatus embodiments correspond to descriptions of the method embodiments. Therefore, for content that is not described in detail, refer to each other.

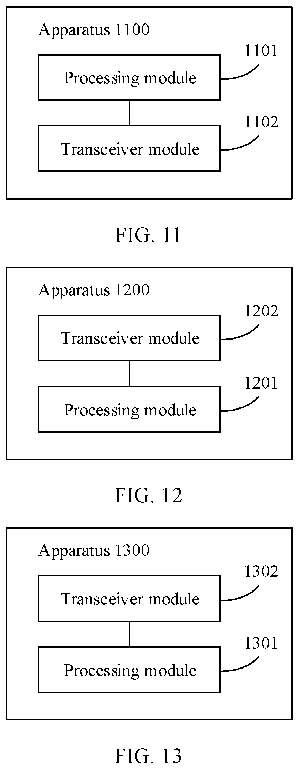

FIG. 11 is a schematic block diagram of an apparatus 1100 according to an embodiment of this application. The apparatus 1100 is configured to implement a function of the first node in the foregoing method embodiments. For example, the apparatus may be a software module or a chip system. The chip may include a chip, or may include a chip and another discrete device.

For example, the apparatus 1100 includes a processing module 1101 and a transceiver module 1102.

The processing module 1101 is configured to obtain first information. The first information indicates a mapping relationship between a second node and the first node.

The transceiver module 1102 is configured to send the first information to a third node. The first information identifies the second node associated with a protocol data unit PDU session.

The transceiver module 1102 may also be referred to as a communication interface, a communication unit, an input/output interface, or the like.

For example, that the first information indicates the mapping relationship between the second node and the first node includes: The first information indicates a first mapping relationship between an identifier of the second node and a first IP address of the first node, or a second mapping relationship between an identifier of the second node and a first port number of the first node, or a third mapping relationship between an identifier of the second node and a first media access control MAC address of the first node, or a mapping relationship between an identifier of the second node and a first identifier of the first node.

It may be understood that the first IP address is one of a plurality of public IP addresses allocated to the first node in the PDU session. The first port number is one of a plurality of port numbers allocated to the first node in the PDU session, and the PDU session includes one public IP address of the first node. The first identifier may be one of a plurality of identifiers temporarily allocated by the first node.

In a possible design, the first information is carried in a non-access stratum NAS message, and the NAS message is any one of NAS messages in a PDU session establishment procedure, a PDU session modification procedure, and a registration procedure. For example, the NAS message may include but is not limited to any one of a registration request message, an access session request message, a PDU session establishment request message, and a PDU session modification request message.

For example, when the first information indicates the first mapping relationship between the identifier of the second node and the first IP address of the first node, or the second mapping relationship between the identifier of the second node and the first port number of the first node, the first information may be carried in PDU session update information. For another example, when the first information indicates the third mapping relationship between the identifier of the second node and the first MAC address of the first node, or the mapping relationship between the identifier of the second node and the first identifier of the first node, the first information may be carried in any NAS information obtained after the first node is successfully registered.

Optionally, the second node in the PDU session is associated with a packet filter, and the packet filter is used to determine a quality of service QoS flow corresponding to the second node in the PDU session.

In a possible implementation, the transceiver module 1102 is further configured to receive access-side session request information or access-side session modification request information from the second node. The processing module 1101 may further: determine that the second node is associated with the PDU session; and establish the first mapping relationship based on the identifier of the second node and the first IP address associated with the PDU session; or establish the second mapping relationship based on the identifier of the second node and the first port number associated with the PDU session; or establish the third mapping relationship based on the identifier of the second node and the first MAC address; or establish the mapping relationship between the identifier of the second node and the first identifier of the first node based on the identifier of the second node and the first identifier.

It may be understood that the access-side session request information indicates that the second node requests the first node to allocate a PDU session, and the access-side session modification request information indicates that the second node requests the first node to modify a PDU session.

Optionally, after sending the first information to the third node, the transceiver module 1102 may further receive second information from the second node. The second information includes link status information and/or node status information. The processing module 1101 may further add the identifier of the second node to the second information, to obtain third information. Further, the transceiver module 1102 may send the third information to the third node. The link status information includes at least one of a short-range measurement amount (short-range air interface status information) and a link status measurement amount between a short-range node and a 5G core network.

In a possible implementation, the transceiver module 1102 may further: receive configuration information from the third node, where the configuration information includes at least one of running status management information, node parameter update information, a link status detection policy, a node status reporting policy, and a QoS configuration policy of the second node; and send the configuration information to the second node.

The link status detection policy includes at least one of a measurement object, a reporting object, a reporting threshold, a reporting period, and an event parameter. The running status management information includes any one of a power-on state, a power-off state, and a sleep state of the second node. The node status update information includes update information corresponding to any one of version information, power information, hardware information, and software information of the second node. The node status reporting policy includes at least one of a reporting object, a reporting period, and a reporting event.

In a possible implementation, the transceiver module 1102 may further send a fourth mapping relationship between the identifier of the second node and an IP address of the second node to a fourth node.

In a possible implementation, the transceiver module 1102 communicates with the second node based on a first communication technology, and communicates with the third node based on a second communication technology.

FIG. 12 is a schematic block diagram of an apparatus 1200 according to an embodiment of this application. The apparatus 1200 is configured to implement a function of the first node in the foregoing method embodiments. For example, the apparatus may be a software module or a chip system. The chip may include a chip, or may include a chip and another discrete device.

For example, the apparatus 1200 includes a processing module 1201 and a transceiver module 1202.

The transceiver module 1202 is configured to receive first information. The first information indicates a mapping relationship between a second node and the first node.

The processing module 1201 is configured to identify, based on the first information, the second node associated with a protocol data unit PDU session.

In a possible implementation, that the first information indicates the mapping relationship between the second node and the first node includes: The first information indicates a first mapping relationship between an identifier of the second node and a first IP address of the first node, or a second mapping relationship between an identifier of the second node and a first port number of the first node, or a third mapping relationship between an identifier of the second node and a first media access control MAC address of the first node, or a mapping relationship between an identifier of the second node and a first identifier of the first node.

The first IP address is any one of a plurality of public IP addresses allocated to the first node in the PDU session. The first port number is any one of a plurality of port numbers allocated to the first node in the PDU session, and the PDU session includes one public IP address of the first node. The first MAC address is one of a plurality of MAC addresses derived by the first node based on a unique MAC address of the first node. The first identifier may be one of a plurality of identifiers temporarily allocated by the first node.

In a possible design, the first information is carried in a non-access stratum NAS message, and the NAS message is any one of NAS messages in a PDU session establishment procedure, a PDU session modification procedure, and a registration procedure. For example, the NAS message may include but is not limited to any one of a registration request message, an access session request message, a PDU session establishment request message, and a PDU session modification request message.

For example, when the first information indicates the first mapping relationship between the identifier of the second node and the first IP address of the first node, or the second mapping relationship between the identifier of the second node and the first port number of the first node, the first information may be carried in PDU session update information. For another example, when the first information indicates the third mapping relationship between the identifier of the second node and the first MAC address of the first node, or the mapping relationship between the identifier of the second node and the first identifier of the first node, the first information may be carried in any NAS information obtained after the first node is successfully registered.

In a possible implementation, the second node in the PDU session is associated with a packet filter, the packet filter is used to determine a quality of service QoS flow corresponding to the second node in the PDU session, and the QoS flow is used to transmit data associated with the second node. The processing module 1201 may: identify, based on the public IP address of the first node in the packet filter and the first mapping relationship, the second node associated with the PDU session; or identify, based on the port number of the first node in the packet filter and the second mapping relationship, the second node associated with the PDU session; or identify, based on the MAC address of the first node in the packet filter and the third mapping relationship, the second node associated with the PDU session; or identify, based on the identifier of the first node in the packet filter and the mapping relationship between the identifier of the second node and the first identifier of the first node, the second node associated with the PDU session.

In a possible implementation, after receiving the first information from the first node, the transceiver module 1202 may further receive third information. The third information includes the identifier of the second node, link status information, and/or node status information. The processing module 1201 may further: identify, based on the identifier of the second node and the first mapping relationship, the second node associated with the third information; or identify, based on the identifier of the second node and the second mapping relationship, the second node associated with the third information; or identify, based on the identifier of the second node and the third mapping relationship, the second node associated with the third information; or identify, based on the identifier of the second node and the mapping relationship between the identifier of the second node and the first identifier of the first node, the second node associated with the third information.

In a possible implementation, the processing module 1201 may further: determine configuration information based on the first information, where the configuration information includes at least one of running status management information, node parameter update information, a link status detection policy, a node status reporting policy, and a QoS configuration policy of the second node; and send the configuration information to the first node.

In a possible implementation, the link status detection policy includes at least one of a measurement object, a reporting object, a reporting threshold, a reporting period, and an event parameter. The running status management information includes any one of a power-on state, a power-off state, and a sleep state of the second node. The node status update information includes update information corresponding to any one of version information, power information, hardware information, and software information of the second node. The node status reporting policy includes at least one of a reporting object, a reporting period, and a reporting event.

In a possible implementation, the transceiver module 1202 communicates with the first node based on a second communication technology; and provides, based on the second communication technology, a service for the second node that is based on a first communication technology.

FIG. 13 is a schematic block diagram of an apparatus 1300 according to an embodiment of this application. The apparatus 1300 is configured to implement a function of the first node in the foregoing method embodiments. For example, the apparatus may be a software module or a chip system. The chip may include a chip, or may include a chip and another discrete device.

For example, the apparatus 1300 includes a processing module 1301 and a transceiver module 1302.

The transceiver module 1302 is configured to receive configuration information from the first node. The configuration information includes at least one of running status management information, node parameter update information, a link status detection policy, and a quality of service QoS configuration policy of a second node. The processing module 1301 is configured to configure the second node based on the configuration information.

In a possible implementation, the link status detection policy includes at least one of a measurement object, a reporting object, a reporting threshold, a reporting period, and an event parameter. The running status management information includes any one of a power-on state, a power-off state, and a sleep state of the second node. The node status update information includes update information corresponding to any one of version information, power information, hardware information, and software information of the second node. The node status reporting policy includes at least one of a reporting object, a reporting period, and a reporting event.

In a possible implementation, the transceiver module 1302 may further send access-side session request information or access-side session modification request information to the first node. It may be understood that the access-side session request information indicates that the second node requests the first node to allocate a PDU session, and the access-side session modification request information indicates that the second node requests the first node to modify a PDU session.

In a possible implementation, the transceiver module 1302 may further send second information to the first node. The second information includes link status information and/or node status information. The link status information includes at least one of a short-range measurement amount (short-range air interface status information) and a link status measurement amount between a short-range node and a 5G core network.

In a possible implementation, the transceiver module 1302 communicates with the first node based on a first communication technology, and obtains a service provided based on a second communication technology from a third node.

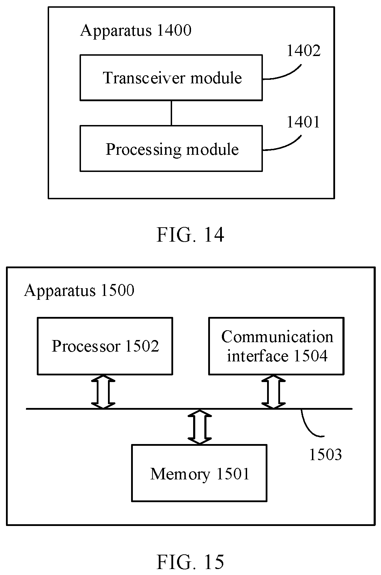

FIG. 14 is a schematic block diagram of an apparatus 1400 according to an embodiment of this application. The apparatus 1400 is configured to implement a function of the fourth node in the foregoing method embodiments. For example, the apparatus may be a software module or a chip system. The chip may include a chip, or may include a chip and another discrete device.

For example, the apparatus 1400 includes a processing module 1401 and a transceiver module 1402.

The transceiver module 1402 is configured to receive a fourth mapping relationship between an identifier of a second node and an IP address of the second node from a first node.

The processing module 1401 is configured to determine the second node based on a fourth mapping relationship and the IP address of the second node.

Module division in embodiments of this application is an example, is only logical function division, and may be other division during actual implementation. In addition, functional modules in embodiments of this application may be integrated into one processor, or may exist alone physically, or two or more modules may be integrated into one module. The integrated module may be implemented in a form of hardware, or may be implemented in a form of a software functional module.

FIG. 15 is a schematic diagram of an apparatus 1500 according to an embodiment of this application. The apparatus 1500 may be a node, or a component in a node, for example, a chip or an integrated circuit. The apparatus 1500 may include at least one processor 1502 and a communication interface 1504. Further, optionally, the apparatus may further include at least one memory 1501. Further, optionally, a bus 1503 may be further included. The memory 1501, the processor 1502, and the communication interface 1504 are connected through the bus 1503.

The memory 1501 is configured to provide storage space, and the storage space may store data such as an operating system and a computer program. The memory 1501 mentioned in this embodiment of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random-access memory (random access-memory, RAM), and is used as an external cache. Based on description used as an example instead of a limitation, many forms of RAMs may be used, for example, a static random-access memory (static RAM, SRAM), a dynamic random-access memory (dynamic RAM, DRAM), a synchronous dynamic random-access memory (synchronous DRAM, SDRAM), a double data rate synchronous dynamic random-access memory (double data rate SDRAM, DDR SDRAM), an enhanced synchronous dynamic random-access memory (enhanced SDRAM, ESDRAM), a synchlink dynamic random-access memory (synchlink DRAM, SLDRAM), and a direct rambus random-access memory (direct rambus RAM, DR RAM).

It should be noted that the memory described in this specification is intended to include but is not limited to these memories and any other appropriate types of memories. The processor 1502 is a module for performing an arithmetic operation and/or a logical operation, and may be specifically one or a combination of processing modules such as a central processing unit (central processing unit, CPU), a graphics processing unit (graphics processing unit, GPU), a microprocessor unit (microprocessor unit, MPU), an application-specific integrated circuit (application-specific integrated circuit, ASIC), a field programmable logic gate array (field programmable gate array, FPGA), a complex programmable logic device (complex programmable logic device, CPLD), a coprocessor (assisting the central processing unit to complete corresponding processing and application), and a microcontroller unit (microcontroller unit, MCU).

It should be noted that when the processor is a general-purpose processor, an ASIC, an FPGA or another programmable logic device, a discrete gate or transistor logic device, or a discrete hardware component, the memory (storage module) may be integrated into the processor.

The communication interface 1504 may be configured to provide an information input or output for the at least one processor; and/or the communication interface may be configured to receive data sent from an external environment and/or send data to an external environment. The communication interface may be an interface of a wired link, including an Ethernet cable or the like; or may be an interface of a wireless link (Wi-Fi, Bluetooth, universal wireless transmission, an in-vehicle short-range communication technology, or the like). Optionally, the communication interface 1504 may further include a transmitter (for example, a radio frequency transmitter or an antenna), a receiver, or the like that is coupled to the interface.

In some embodiments, the apparatus 1500 may be the first node or a component in the first node in the foregoing method embodiments, for example, a chip or an integrated circuit.

In some other embodiments, the apparatus 1500 may be the third node or a component in the third node in the foregoing method embodiments, for example, a chip or an integrated circuit.

In some other embodiments, the apparatus 1500 may be the second node or a component in the second node in the foregoing method embodiments, for example, a chip or an integrated circuit.

In some other embodiments, the apparatus 1500 may be the fourth node or a component in the fourth node in the foregoing method embodiments, for example, a chip or an integrated circuit.

For specific details, reference may be made to the descriptions in the foregoing method embodiments, and details are not described herein again.

An embodiment of this application further provides a terminal. The terminal may be a smart terminal such as a smartphone, a notebook computer, or a tablet computer that has a short-range communication function, a mouse, a keyboard, a headset, a sound box, an in-vehicle playback device, or the like. The terminal includes a first apparatus and/or a second apparatus. The first apparatus and the second apparatus may be respectively the first node and the second node in the embodiment shown in FIG. 3. The first apparatus and the second apparatus may be of a same type or different types.

When the communication apparatus is a chip, the chip includes a transceiver unit and a processing unit. The transceiver unit may be an input/output circuit or a communication interface. The processing unit is a processor, a microprocessor, or an integrated circuit integrated on the chip.

The method and the apparatus are conceived based on a same or similar technical concept. The method and the apparatus have similar principles for resolving the problems. Therefore, for implementation of the apparatus and the method, refer to each other. Details of repeated parts are not described.

An embodiment of this application further provides a computer-readable storage medium, including instructions. When the instructions are run on a computer, the computer is enabled to perform the methods in the foregoing embodiments.

An embodiment of this application further provides a chip system. The chip system includes at least one processor and an interface circuit. Further, optionally, the chip system may further include a memory or an external memory. The processor is configured to execute instruction and/or data interaction through the interface circuit, to implement the methods in the foregoing method embodiments. The chip system may include a chip, or may include a chip and another discrete device.

An embodiment of this application further provides a computer program product, including instructions. When the instructions are run on a computer, the computer is enabled to perform the methods in the foregoing embodiments.

In embodiments of this application, the processor may be a general-purpose processor, a digital signal processor, an application-specific integrated circuit, a field programmable gate array or another programmable logic device, a discrete gate or transistor logic device, a discrete hardware component, coprocessor, or the like, and may implement or execute the methods, steps, and logical block diagrams disclosed in embodiments of this application. The general-purpose processor may be a microprocessor, any conventional processor, or the like. The steps of the methods disclosed with reference to embodiments of this application may be directly performed by a hardware processor, or may be performed by using a combination of hardware in the processor and a software module.

In embodiments of this application, the memory may be a non-volatile memory, for example, a hard disk drive (hard disk drive, HDD) or a solid-state drive (solid-state drive, SSD), or may be a volatile memory (volatile memory), for example, a random-access memory (random-access memory, RAM). The memory is any other medium that can include or store expected program code in a form of an instruction or a data structure and that can be accessed by a computer, but is not limited thereto. The memory in embodiments of this application may alternatively be a circuit or any other apparatus that can implement a storage function, **and** is configured to store program instructions and/or data.

All or some of the methods in embodiments of this application may be implemented by using software, hardware, firmware, or any combination thereof. **When** software is used for implementation, all or some of embodiments may be implemented in a form of a computer program **product.** The computer program product includes one or more computer instructions. When the computer program instructions are loaded and executed on a computer, the procedures or functions according to embodiments of this application are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by the computer, or a data storage device such as a server or a data center, integrating one or more usable media. The usable media may be a magnetic medium (for example, a floppy disk, a hard disk drive, or a magnetic tape), an optical medium (for example, a digital video disc (digital video disc, DVD for short)), or a semiconductor medium (for example, an SSD), or the like.

A person of ordinary skill in the art may be aware that the units and algorithm steps in the examples described with reference to the embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application, as established by the appended set of claims.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

The units described as separate parts may or may not be physically separate, and parts displayed as units may or may not be physical units, that is, may be located in one position, or may be distributed on a plurality of network units. Some or all of the units may be selected depending on actual requirements to achieve the objectives of the solutions in embodiments.

When the functions are implemented in a form of a software functional unit and sold or used as a separate product, the functions may be stored in a computer-readable storage medium. Based on such an understanding, the technical solutions of this application essentially or parts contributing to the prior art or some of the technical solutions may be embodied in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes any medium that can store program code, such as a USB flash drive, a removable hard disk, a read-only memory (read-only memory, ROM), a random-access memory (random-access memory, RAM), a magnetic disk, or an optical disc.

## Claims

1. A communication method, applied to a first node, wherein the method comprises:
obtaining (301) first information, wherein the first information indicates a mapping relationship between a second node and the first node, wherein the second node is a terminal node not supporting non access stratum, NAS, signaling transmission; and
sending (302) the first information to a third node, wherein the first information identifies the second node associated with a protocol data unit, PDU, session,
wherein the PDU session includes a plurality of public internet protocol, IP, addresses of the first node, the mapping relationship between the second node and the first node comprises a first mapping relationship between an identifier of the second node and a first IP address of the first node.

2. The method according to claim 1, wherein that the first information indicates a mapping relationship between a second node and the first node comprises:
a second mapping relationship between an identifier of the second node and a first port number of the first node, or a third mapping relationship between an identifier of the second node and a first media access control, MAC, address of the first node.

3. The method according to claim 2, wherein the first IP address is one of a plurality of public IP addresses allocated to the first node in the PDU session.

4. The method according to claim 2, wherein the first port number is one of a plurality of port numbers allocated to the first node in the PDU session.

5. The method according to claim 2, wherein the first MAC address is one of a plurality of MAC addresses derived by the first node based on a unique MAC address of the first node.

6. The method according to any one of claims 1 to 5, wherein the first information is carried in a non-access stratum, NAS, message, and the NAS message comprises any one of NAS messages in a PDU session establishment procedure, a PDU session modification procedure, and a registration procedure.

7. The method according to any one of claims 1 to 6, wherein the second node in the PDU session is associated with a packet filter, and the packet filter is used to determine a quality of service, QoS, flow corresponding to the second node in the PDU session.

8. A communication method, applied to a third node, wherein the method comprises:
receiving (303) first information, wherein the first information indicates a mapping relationship between a second node and a first node, wherein the second node is a terminal node not supporting non access stratum, NAS, signaling transmission; and
identifying, based on the first information, the second node associated with a protocol data unit PDU session,
wherein the PDU session includes a plurality of public internet protocol, IP, addresses of the first node, the mapping relationship between the second node and the first node comprises a first mapping relationship between an identifier of the second node and a first IP address of the first node.

9. The method according to claim 8, wherein that the first information indicates a mapping relationship between a second node and a first node comprises:
a second mapping relationship between an identifier of the second node and a first port number of the first node, or a third mapping relationship between an identifier of the second node and a first media access control MAC address of the first node.

10. The method according to claim 9, wherein the first IP address is any one of a plurality of public IP addresses allocated to the first node in the PDU session.

11. The method according to claim 9, wherein the first port number is any one of a plurality of port numbers allocated to the first node in the PDU session.

12. A communication apparatus, wherein the apparatus comprises at least one processor and a memory storing computer program that when executed by the at least one of processor, cause the apparatus to perform the method described in any one of claims 1 to 11.

13. A computer-readable storage medium, comprising program instructions, wherein when the program instructions are run on a computer, the computer is enabled to perform the method according to any one of claims 1 to 11.

14. A computer program product comprising computer program or instructions, wherein when the computer program or instructions are run on a computer, the computer is enabled to perform the method according to any one of claims 1 to 11.

## Patentansprüche

1. Kommunikationsverfahren, das in einem ersten Knoten angewandt wird, wobei das Verfahren umfasst:
Erhalten (301) von ersten Informationen, wobei die ersten Informationen eine Zuordnungsbeziehung zwischen einem zweiten Knoten und dem ersten Knoten anzeigen, wobei der zweite Knoten ein Endgeräteknoten ist, der keine Signalisierungsübertragung einer Nichtzugangsebene, NAS-Signalisierungsübertragung, unterstützt; und
Senden (302) der ersten Informationen an einen dritten Knoten, wobei die ersten Informationen den zweiten Knoten identifizieren, der mit einer Sitzung einer Protokolldateneinheit, PDU-Sitzung, assoziiert ist,
wobei die PDU-Sitzung eine Vielzahl von öffentlichen Internetprotokolladressen, IP-Adressen, des ersten Knotens beinhaltet, wobei die Zuordnungsbeziehung zwischen dem zweiten Knoten und dem ersten Knoten eine erste Zuordnungsbeziehung zwischen einer Kennung des zweiten Knotens und einer ersten IP-Adresse des ersten Knotens umfasst.

2. Verfahren nach Anspruch 1, wobei die Tatsache, dass die ersten Informationen eine Zuordnungsbeziehung zwischen einem zweiten Knoten und dem ersten Knoten anzeigen, umfasst:
eine zweite Zuordnungsbeziehung zwischen einer Kennung des zweiten Knotens und einer ersten Anschlussnummer des ersten Knotens; oder eine dritte Zuordnungsbeziehung zwischen einer Kennung des zweiten Knotens und einer ersten Adresse einer Medienzugangssteuerung, MAC-Adresse, des ersten Knotens.

3. Verfahren nach Anspruch 2, wobei die erste IP-Adresse eine aus einer Vielzahl von öffentlichen IP-Adressen ist, die dem ersten Knoten in der PDU-Sitzung zugewiesen wurden.

4. Verfahren nach Anspruch 2, wobei die erste Anschlussnummer eine aus einer Vielzahl von Anschlussnummern ist, die dem ersten Knoten in der PDU-Sitzung zugewiesen wurden.

5. Verfahren nach Anspruch 2, wobei die erste MAC-Adresse eine aus einer Vielzahl von MAC Adressen ist, die durch den ersten Knoten basierend auf einer eindeutigen MAC-Adresse des ersten Knotens abgeleitet werden.

6. Verfahren nach einem der Ansprüche 1 bis 5, wobei die ersten Informationen in einer Nachricht einer Nichtzugangsebene, NAS-Nachricht, mitgeführt werden, und wobei die NAS-Nachricht eine beliebige von NAS-Nachrichten in einem Einrichtungsprozess von PDU-Sitzungen, einem Modifikationsprozess von PDU-Sitzungen und einem Registrierungsprozess umfasst.

7. Verfahren nach einem der Ansprüche 1 bis 6, wobei der zweite Knoten in der PDU-Sitzung mit einem Datenpaketfilter assoziiert ist, und wobei der Datenpaketfilter verwendet wird, um einen Dienstgütefluss, QoS-Fluss, zu ermitteln, der dem zweiten Knoten in der PDU-Sitzung entspricht.

8. Kommunikationsverfahren, das in einem dritten Knoten angewandt wird, wobei das Verfahren umfasst:
Empfangen (303) von ersten Informationen, wobei die ersten Informationen eine Zuordnungsbeziehung zwischen einem zweiten Knoten und einem ersten Knoten anzeigen, wobei der zweite Knoten ein Endgeräteknoten ist, der keine Signalisierungsübertragung einer Nichtzugangsebene, NAS-Signalisierungsübertragung, unterstützt; und
Identifizieren, basierend auf den ersten Informationen, des zweiten Knotens, der mit einer Sitzung einer Protokolldateneinheit, PDU-Sitzung, assoziiert ist,
wobei die PDU-Sitzung eine Vielzahl von öffentlichen Internetprotokolladressen, IP-Adressen, des ersten Knotens beinhaltet, wobei die Zuordnungsbeziehung zwischen dem zweiten Knoten und dem ersten Knoten eine erste Zuordnungsbeziehung zwischen einer Kennung des zweiten Knotens und einer ersten IP-Adresse des ersten Knotens umfasst.

9. Verfahren nach Anspruch 8, wobei die Tatsache, dass die ersten Informationen eine Zuordnungsbeziehung zwischen einem zweiten Knoten und einem ersten Knoten anzeigen, umfasst:
eine zweite Zuordnungsbeziehung zwischen einer Kennung des zweiten Knotens und einer ersten Anschlussnummer des ersten Knotens; oder eine dritte Zuordnungsbeziehung zwischen einer Kennung des zweiten Knotens und einer ersten Adresse einer Medienzugangssteuerung, MAC-Adresse, des ersten Knotens.

10. Verfahren nach Anspruch 9, wobei die erste IP-Adresse eine beliebige aus einer Vielzahl von öffentlichen IP-Adressen ist, die dem ersten Knoten in der PDU-Sitzung zugewiesen wurden.

11. Verfahren nach Anspruch 9, wobei die erste Anschlussnummer eine beliebige aus einer Vielzahl von Anschlussnummern ist, die dem ersten Knoten in der PDU-Sitzung zugewiesen wurden.

12. Kommunikationsvorrichtung, wobei die Vorrichtung mindestens einen Prozessor und einen Speicher umfasst, in dem ein Computerprogramm gespeichert ist, das wenn es von dem mindestens einen Prozessor ausgeführt wird, die Vorrichtung veranlasst, das Verfahren nach einem der Ansprüche 1 bis 11 durchzuführen.

13. Computerlesbares Speichermedium, das Programmanweisungen umfasst, wobei, wenn die Programmanweisungen in einem Computer ausgeführt werden, der Computer aktiviert wird, um das Verfahren nach einem der Ansprüche 1 bis 11 durchzuführen.

14. Computerprogrammprodukt, das ein Computerprogramm oder Anweisungen umfasst, wobei, wenn das Computerprogramm oder die Anweisungen in einem Computer ausgeführt werden, der Computer aktiviert wird, um das Verfahren nach einem der Ansprüche 1 bis 11 durchzuführen.

## Revendications

1. Procédé de communication, appliqué à un premier nœud, dans lequel le procédé comprend :
l'obtention (301) de premières informations, dans lequel les premières informations indiquent une relation de mappage entre un deuxième nœud et le premier nœud, dans lequel le deuxième nœud est un nœud terminal ne prenant pas en charge de transmission de signalisation de strate de non-accès, NAS ; et
l'envoi (302) des premières informations à un troisième nœud, dans lequel les premières informations identifient le deuxième nœud associé à une session d'unité de données de protocole, PDU,
dans lequel la session de PDU comprend une pluralité d'adresses publiques de protocole Internet, IP, du premier nœud, la relation de mappage entre le deuxième nœud et le premier nœud comprend une première relation de mappage entre un identifiant du deuxième nœud et une première adresse IP du premier nœud.

2. Procédé selon la revendication 1, dans lequel le fait que les premières informations indiquent une relation de mappage entre un deuxième nœud et le premier nœud comprend :
une deuxième relation de mappage entre un identifiant du deuxième nœud et un premier numéro de port du premier nœud, ou une troisième relation de mappage entre un identifiant du deuxième nœud et une première adresse de contrôle d'accès au support, MAC, du premier nœud.

3. Procédé selon la revendication 2, dans lequel la première adresse IP est l'une d'une pluralité d'adresses IP publiques attribuées au premier nœud dans la session de PDU.

4. Procédé selon la revendication 2, dans lequel le premier numéro de port est l'un d'une pluralité de numéros de port attribués au premier nœud dans la session de PDU.

5. Procédé selon la revendication 2, dans lequel la première adresse MAC est l'une d'une pluralité d'adresses MAC dérivées par le premier nœud sur la base d'une adresse MAC unique du premier nœud.

6. Procédé selon l'une quelconque des revendications 1 à 5, dans lequel les premières informations sont acheminées dans un message de strate de non-accès, NAS, et le message NAS comprend l'un quelconque des messages NAS dans une procédure d'établissement de session de PDU, une procédure de modification de session de PDU et une procédure d'enregistrement.

7. Procédé selon l'une quelconque des revendications 1 à 6, dans lequel le deuxième nœud dans la session de PDU est associé à un filtre de paquets, et le filtre de paquets est utilisé pour déterminer un flux de qualité de service, QoS, correspondant au deuxième nœud dans la session de PDU.

8. Procédé de communication, appliqué à un troisième nœud, dans lequel le procédé comprend :
la réception (303) de premières informations, dans lequel les premières informations indiquent une relation de mappage entre un deuxième nœud et un premier nœud, dans lequel le deuxième nœud est un nœud terminal ne prenant pas en charge de transmission de signalisation de strate de non-accès, NAS ; et
l'identification, sur la base des premières informations, du deuxième nœud associé à une session d'unité de données de protocole, PDU,
dans lequel la session de PDU comprend une pluralité d'adresses publiques de protocole Internet, IP, du premier nœud, la relation de mappage entre le deuxième nœud et le premier nœud comprend une première relation de mappage entre un identifiant du deuxième nœud et une première adresse IP du premier nœud.

9. Procédé selon la revendication 8, dans lequel le fait que les premières informations indiquent une relation de mappage entre un deuxième nœud et un premier nœud comprend :
une deuxième relation de mappage entre un identifiant du deuxième nœud et un premier numéro de port du premier nœud, ou une troisième relation de mappage entre un identifiant du deuxième nœud et une première adresse de contrôle d'accès au support, MAC, du premier nœud.

10. Procédé selon la revendication 9, dans lequel la première adresse IP est l'une quelconque d'une pluralité d'adresses IP publiques attribuées au premier nœud dans la session de PDU.

11. Procédé selon la revendication 9, dans lequel le premier numéro de port est l'un quelconque d'une pluralité de numéros de port attribués au premier nœud dans la session de PDU.

12. Appareil de communication, dans lequel l'appareil comprend au moins un processeur et une mémoire stockant un programme informatique qui, lorsqu'il est exécuté par l'au moins un processeur, amène l'appareil à mettre en œuvre le procédé décrit dans l'une quelconque des revendications 1 à 11.

13. Support de stockage lisible par ordinateur, comprenant des instructions de programme, dans lequel lorsque les instructions de programme sont exécutées sur un ordinateur, l'ordinateur est activé pour mettre en œuvre le procédé selon l'une quelconque des revendications 1 à 11.

14. Produit de programme d'ordinateur comprenant un programme ou des instructions d'ordinateur, dans lequel lorsque que le programme ou les instructions d'ordinateur sont exécutés sur un ordinateur, l'ordinateur est activé pour mettre en œuvre le procédé selon l'une quelconque des revendications 1 à 11.
